# EUROPEAN PATENT APPLICATION

(11) **EP 4 383 774 A1**
(43) Date of publication of application: **12.06.2024**
(21) Application number: 22857827.4
(22) Date of filing: 17.08.2022
(51) Int. Cl.: H04W 8/24

(54) **ARTIFICIAL INTELLIGENCE AI MODEL TRANSMISSION METHOD AND APPARATUS**

(30) Priority: 17.08.2021 CN 202110945160; 26.09.2021 CN 202111128825; 22.12.2021 CN 202111576356
(71) Applicant: Huawei Technologies Co., Ltd., Shenzhen, Guangdong 518129 (CN)
(72) Inventor: WANG, Sihai, Shenzhen, Guangdong 518129 (CN); YANG, Rui, Shenzhen, Guangdong 518129 (CN); QIN, Cheng, Shenzhen, Guangdong 518129 (CN)
(74) Representative: Gill Jennings & Every LLP
(86) International application number: PCT/CN2022/112905
(87) International publication number: WO 2023/020516

(57) **Abstract**

An artificial intelligence AI model transmission method and an apparatus are provided. The method includes: A terminal device sends first information to a network device, where the first information includes an AI model format supported by the terminal device, the AI model format supported by the terminal device includes a first AI model format, and the first information further includes a hardware requirement and/or a software requirement of the terminal device; and the terminal device receives second information from the network device, where the second information indicates obtaining method information of a first AI model represented in the first AI model format, and the first AI model format is determined based on the first information. A model format of the first AI model obtained by the terminal device is supported by the terminal device, and meets the hardware requirement and/or the software requirement of the terminal device. This ensures that the terminal device can identify the AI model format, and can execute the AI model under a hardware condition and/or a software condition of the terminal device, so that feasibility of executing a communication service by using the AI model is ensured.

## Description

### CROSS-REFERENCE TO RELATED APPLICATIONS

This application claims priority to Chinese Patent Application No. 202110945160.3, filed with the China National Intellectual Property Administration on August 17, 2021 and entitled "AI MODEL TRANSMISSION METHOD AND APPARATUS", which is incorporated herein by reference in its entirety; this application claims priority to some content of Chinese Patent Application No. 202111128825.8, filed with the China National Intellectual Property Administration on September 26, 2021 and entitled "ARTIFICIAL INTELLIGENCE AI MODEL TRANSMISSION METHOD AND APPARATUS", other than all content of Application No. 202110945160.3, and the some content is incorporated herein by reference; and this application claims priority to some content of Chinese Patent Application No. 202111576356.6, filed with the China National Intellectual Property Administration on December 22, 2021 and entitled "ARTIFICIAL INTELLIGENCE AI MODEL TRANSMISSION METHOD AND APPARATUS", other than all content of Application No. 202110945160.3 and Application No. 202111128825.8, and the some content is incorporated herein by reference.

### TECHNICAL FIELD

Embodiments of this application relate to the field of communication technologies, and in particular, to an artificial intelligence AI model transmission method and an apparatus.

### BACKGROUND

An artificial intelligence (artificial intelligence, AI) technology is a branch of computer science, runs through the history of computer development, and is an important development direction of the information technology industry. With development of communication technologies, more applications will be intelligentized through AI. Currently, the AI technology is introduced into a wireless communication system, and an AI module may gradually replace a functional module in the wireless communication system. After the AI technology is introduced into the wireless communication system, a possible working mode is as follows: A network device sends an AI model to a terminal device, and the terminal device receives the AI model from the network device and then uses the AI model to perform wireless communication.

The AI model may be represented in different formats at different levels from a design to a hardware-executable file. Different terminal devices have different capabilities of identifying an AI model format. In this case, the AI model delivered by the network device may not be identified by the terminal device. As a result, the AI model cannot be used for wireless communication.

### SUMMARY

Embodiments of this application provide an artificial intelligence AI model transmission method and an apparatus, to better apply an AI technology to a wireless communication system.

Specific technical solutions provided in embodiments of this application are described below.

According to a first aspect, an artificial intelligence AI model transmission method is provided. The method may be performed by a terminal device, or may be performed by a component of a terminal device. The method may be implemented by using the following steps: The terminal device sends first information to a network device, where the first information includes an AI model format supported by the terminal device, and the AI model format supported by the terminal device includes a first AI model format; and the terminal device receives second information from the network device, where the second information indicates obtaining method information of a first AI model. The first AI model is represented in the first AI model format, the first AI model format is determined based on the first information, and/or the first AI model is applied to a first communication scenario. The terminal device reports the supported AI model format to the network device, so that the network device can learn of the AI model format supported by the terminal device. In this way, the network device determines the first AI model format based on the AI model format supported by the terminal device, and the first AI model format is definitely the model format supported by the terminal device. The network device indicates, to the terminal device, the obtaining method information of the first AI model represented in the first AI model format. In this way, the model format that is of the first AI model and that is obtained by the terminal device based on the obtaining method information is definitely supported by the terminal device. This ensures that the terminal device and the network device reach an agreement on a model format of an AI model for a wireless communication service, and the terminal device can understand or identify the AI model format, so that feasibility of executing the communication service by using the AI model is ensured.

In a possible design, the terminal device obtains the first AI model based on the obtaining method information. The terminal device can download the first AI model from a first device based on the obtaining method information. The first device may be a server or a core network device. In this way, the first device can store and maintain the AI model, and a quantity of first devices may be much less than a quantity of network devices. This reduces maintenance costs, reduces overheads and power consumption of the network device, and improves performance of a communication system.

In a possible design, the terminal device sends a request message to the first device, where the request message is used to request the first device to determine whether the first AI model meets a hardware requirement of the terminal device. When determining that the first AI model meets the hardware requirement of the terminal device, the first device sends the first AI model to the terminal device. In this way, the first AI model can better adapt to the hardware requirement of the terminal device. The request message may also indicate the first communication scenario.

Based on information indicating that the request message is used to request the first device to determine whether the first AI model meets the hardware requirement of the terminal device, in a possible design, the request message includes an indication of the first Al model and/or the first AI model format. The indication of the first AI model indicates the to-be-obtained first AI model. The indication of the first AI model and/or the first AI model format indicates a model that needs to be delivered by the first device. The indication of the first AI model may be, for example, an identifier of the first AI model. The first device and the terminal device pre-negotiate a correspondence between a plurality of AI models and a plurality of identifiers. In this way, the first device may select, based on the indication of the first AI model, an AI model that needs to be delivered to the terminal device.

In a possible design, the request message is used to request the first AI model represented in the first AI model format.

Based on information indicating that the request message is used to request the first AI model represented in the first AI model format, in a possible design, the request message further indicates the first AI model format. The first AI model format may be a model format output by a deep learning framework, an intermediate representation layer model format, or a model format represented by an executable file. In a possible design, the request message includes one or more of the following: a first threshold, a second threshold, a hardware model, a hardware version, a storage capability, a computing capability, or a capability of supporting heterogeneous computing. The first threshold is a maximum latency of a part executed by an AI model when the AI model is used by the terminal device to execute a communication service, the second threshold is maximum power consumption of a part executed by an AI model when the AI model is used by the terminal device to execute a communication service, and the AI model compilation capability includes a capability of compiling and converting the AI model format. The terminal device reports the first threshold, so that the first device can determine, based on the first threshold, whether the first AI model meets a latency requirement. In this way, the first AI model can better meet a communication latency requirement, and an AI technology is better applied to the communication service. The terminal device reports the second threshold, so that the first device can determine, based on the second threshold, whether the first AI model meets a power consumption requirement. In this way, the first AI model can better adapt to the power consumption requirement of the terminal device.

In a possible design, the terminal device sends third information to the network device, where the third information indicates whether the terminal device uses the first AI model to execute the communication service. The third information can indicate that the terminal device uses the AI technology to execute the communication service, so that working modes of the terminal device and the network device can be consistent.

In a possible design, the AI model format includes one or more of the following: a model format output by a deep learning framework, an intermediate representation layer model format, or a model format represented by an executable file. Each model format includes one or more specific AI model file formats.

In a possible design, the first information further includes the first threshold and/or the second threshold, the first threshold is a maximum latency of a part executed by an AI model when the AI model is used by the terminal device to execute a communication service, and the second threshold is maximum power consumption of a part executed by an AI model when the AI model is used by the terminal device to execute a communication service. The terminal device reports the first threshold, so that the network device can determine, based on the first threshold, whether the first AI model meets a latency requirement. In this way, the first AI model can better meet a communication latency requirement, and an AI technology is better applied to the communication service. The terminal device reports the second threshold, so that the network device can determine, based on the second threshold, whether the first AI model meets a power consumption requirement. In this way, the first AI model can better adapt to the power consumption requirement of the terminal device.

In a possible design, the first information further includes one or more of the following: the hardware model, the hardware version, the storage capability, the computing capability, the capability of supporting heterogeneous computing, or an AI model compilation capability, and the AI model compilation capability includes the capability of compiling and converting the AI model format. In this way, an AI model that better matches a hardware capability and a software capability of the terminal device can be obtained based on various parameters of the first information, so that the AI technology is better applied to the communication service. The software capability may include the compilation capability of the terminal device.

In a possible design, the terminal device receives working mode configuration information from the network device, where the working mode configuration information is used to configure a working mode in which the terminal device executes the communication service, the working mode is an AI mode, and the AI mode indicates that the terminal device uses the first AI model to execute the communication service. The working mode configuration information can indicate that the terminal device uses the AI technology to execute the communication service, so that working modes of the terminal device and the network device can be consistent.

In a possible design, the working mode configuration information further includes effective time of the first AI model. The effective time of the first AI model is configured, so that the network device and the terminal device can synchronously switch to the AI mode, and then the working modes of the terminal device and the network device are consistent in terms of time.

According to a second aspect, an artificial intelligence AI model transmission method is provided. The method may be performed by a network device, or may be performed by a component of a network device. The method may be implemented by using the following steps: The network device receives first information from a terminal device, where the first information includes an AI model format supported by the terminal device, and the AI model format supported by the terminal device includes a first AI model format; and the network device sends second information to the terminal device, where the second information indicates the first AI model format and obtaining method information of a first AI model represented in the first AI model format, and the first AI model format is determined based on the first information.

In a possible design, the obtaining method information includes a download address of the first AI model.

In a possible design, the network device receives third information from the terminal device, where the third information indicates whether the terminal device uses the first AI model to execute a communication service.

In a possible design, the AI model format includes one or more of the following: a model format output by a deep learning framework, an intermediate representation layer model format, or a model format represented by an executable file.

In a possible design, the first information further includes a first threshold and/or a second threshold, the first threshold is a maximum latency of a part executed by an AI model when the AI model is used by the terminal device to execute the communication service, and the second threshold is maximum power consumption of a part executed by an AI model when the AI model is used by the terminal device to execute a communication service.

In a possible design, the first AI model meets a first hardware requirement of the terminal device, and the first hardware requirement includes a latency requirement indicated by the first threshold, and/or a power consumption requirement indicated by the second threshold.

In a possible design, the first information further includes one or more of the following: a hardware model, a hardware version, a storage capability, a computing capability, or a capability of supporting heterogeneous computing.

In a possible design, the first AI model meets a second hardware requirement of the terminal device, and the second hardware requirement includes a storage space requirement indicated by the storage capability.

In a possible design, the first information further includes an AI model compilation capability, and the AI model compilation capability includes a capability of compiling and converting the AI model format.

In a possible design, the network device determines, based on the first information, that the first AI model format is the model format output by the deep learning framework or the intermediate representation layer model format.

In a possible design, when the terminal device does not support an AI model compilation capability, the network device determines that the first AI model format is the model format represented by the executable file.

In a possible design, the network device sends working mode configuration information to the terminal device, where the working mode configuration information is used to configure a working mode in which the terminal device executes the communication service, the working mode is an AI mode, and the AI mode indicates that the terminal device uses the first AI model to execute the communication service. The working mode configuration information can indicate that the terminal device uses the AI technology to execute the communication service, so that working modes of the terminal device and the network device can be consistent.

Based on information indicating that the network device sends the working mode configuration information to the terminal device, optionally, the working mode configuration information further includes effective time of the first AI model. In this way, the network device and the terminal device can synchronously switch to the AI mode, and then the working modes of the terminal device and the network device are consistent in terms of time.

For beneficial effects of the second aspect and the possible designs of the second aspect, refer to the related descriptions of the first aspect. Details are not described herein again.

According to a third aspect, an artificial intelligence AI model transmission method is provided. The method may be performed by a first device, or may be performed by a component of a first device. The first device may be a core network device or an application server. The method may be implemented by using the following steps: A first device receives a request message from a terminal device; and the first device may perform the following two solutions based on different functions of the request message. In one solution, the first device determines, based on the request message, whether a first AI model meets a hardware requirement of the terminal device, and the first device sends fourth information to the terminal device, where the fourth information includes a result of determining whether the first AI model meets the hardware requirement of the terminal device. In the other solution, the first device determines, based on the request message, a first AI model represented in a first AI model format. Optionally, the first device also determines whether the first AI model meets a hardware requirement of the terminal device; and the first device sends fourth information to the terminal device. If the first AI model meets the hardware requirement of the terminal device, the fourth information includes the first AI model represented in the first AI model format; or if the first AI model does not meet the hardware requirement of the terminal device, the fourth information includes a determining result indicating that the first AI model does not meet the hardware requirement of the terminal device.

Based on information indicating that the request message is used to request the first device to determine whether the first AI model meets the hardware requirement of the terminal device, in a possible design, the request message includes an indication of the first AI model and/or the first AI model format. The indication of the first AI model indicates the to-be-obtained first AI model. The indication of the first AI model and/or the first AI model format indicates a model that needs to be delivered by the first device. The indication of the first AI model may be, for example, an identifier of the first AI model. The first device and the terminal device pre-negotiate a correspondence between a plurality of AI models and a plurality of identifiers. In this way, the first device may select, based on the indication of the first AI model, an AI model that needs to be delivered to the terminal device.

In a possible design, the request message is used to request the first AI model represented in the first AI model format.

Based on information indicating that the request message is used to request the first AI model represented in the first AI model format, in a possible design, the request message further indicates the first AI model format. The first AI model format may be a model format output by a deep learning framework, an intermediate representation layer model format, or a model format represented by an executable file.

In a possible design, the first AI model format is a model format output by a deep learning framework, an intermediate representation layer model format, or a model format represented by an executable file.

In a possible design, the request message carries a first threshold, and the first threshold is a maximum latency of a part executed by an AI model when the AI model is used by the terminal device to execute a communication service.

In a possible design, the determining whether a first AI model meets a hardware requirement of the terminal device may be implemented by using the following steps: when a latency of a part executed by the first AI model when the first AI model is used to execute a communication service does not exceed the first threshold, determining that the first AI model meets a latency requirement of the terminal device; and/or when a latency of a part executed by the first AI model when the first AI model is used to execute a communication service exceeds the first threshold, determining that the first AI model does not meet a latency requirement of the terminal device.

In a possible design, the request message carries a second threshold, and the second threshold is maximum power consumption of a part executed by an AI model when the AI model is used by the terminal device to execute a communication service.

In a possible design, the determining whether a first AI model meets a hardware requirement of the terminal device may be implemented by using the following steps: when power consumption of a part executed by the first AI model when the first AI model is used to execute a communication service does not exceed the second threshold, determining that the first AI model meets a power consumption requirement of the terminal device; and/or when power consumption of a part executed by the first AI model when the first AI model is used to execute a communication service exceeds the second threshold, determining that the first AI model does not meet a power consumption requirement of the terminal device.

In a possible design, the request message further includes one or more of the following: a hardware model, a hardware version, a storage capability, a computing capability, or a capability of supporting heterogeneous computing.

In a possible design, the determining whether a first AI model meets a hardware requirement of the terminal device may be implemented by using the following steps: when storage space occupied by the first AI model does not exceed storage space indicated by the storage capability of the terminal device, determining that the first AI model meets a storage space requirement of the terminal device; and/or when storage space occupied by the first AI model exceeds storage space indicated by the storage capability of the terminal device, determining that the first AI model does not meet a storage space requirement of the terminal device.

For beneficial effects of the third aspect and the possible designs of the third aspect, refer to the related descriptions of the first aspect. Details are not described herein again.

According to a fourth aspect, a communication apparatus is provided. The apparatus may be a terminal device, or may be a component (for example, a chip, a chip system, or a circuit) located in a terminal device. The apparatus has a function of implementing the method in any one of the first aspect or the possible designs of the first aspect. The function may be implemented by hardware, or may be implemented by executing corresponding software by hardware. The hardware or the software includes one or more modules corresponding to the foregoing function. In a design, the apparatus may include a processing unit and a transceiver unit. For example, the transceiver unit is configured to send first information to a network device, where the first information includes an AI model format supported by the terminal device, and the AI model format supported by the terminal device includes a first AI model format. The transceiver unit is further configured to receive second information from the network device, where the second information indicates the first AI model format and obtaining method information of a first AI model represented in the first AI model format, and the first AI model format is determined based on the first information. For more detailed descriptions of the processing unit and the transceiver unit, directly refer to related descriptions in the first aspect. For beneficial effects of the fourth aspect and the possible designs of the fourth aspect, refer to corresponding descriptions in the first aspect.

According to a fifth aspect, a communication apparatus is provided. The apparatus may be a network device, or may be a component (for example, a chip, a chip system, or a circuit) located in a network device. The apparatus has a function of implementing the method in any one of the second aspect or the possible designs of the second aspect. The function may be implemented by hardware, or may be implemented by executing corresponding software by hardware. The hardware or the software includes one or more modules corresponding to the foregoing function. In a design, the apparatus may include a processing unit and a transceiver unit. For example, the transceiver unit is configured to receive first information from a terminal device, where the first information includes an AI model format supported by the terminal device, and the AI model format supported by the terminal device includes a first AI model format. The transceiver unit is further configured to send second information to the terminal device, where the second information indicates the first AI model format and obtaining method information of a first AI model represented in the first AI model format, and the first AI model format is determined based on the first information. For more detailed descriptions of the processing unit and the transceiver unit, directly refer to related descriptions in the second aspect. For beneficial effects of the fifth aspect and the possible designs of the fifth aspect, refer to corresponding descriptions in the second aspect.

According to a sixth aspect, a communication apparatus is provided. The apparatus may be a first device, or may be a component (for example, a chip, a chip system, or a circuit) located in a first device. The first device may be a core network device or an application server. The apparatus has a function of implementing the method in any one of the third aspect or the possible designs of the third aspect. The function may be implemented by hardware, or may be implemented by executing corresponding software by hardware. The hardware or the software includes one or more modules corresponding to the foregoing function. In a design, the apparatus may include a processing unit and a transceiver unit. For example, the transceiver unit is configured to receive a request message from a terminal device; and the processing unit is configured to: determine, based on the request message, whether a first AI model meets a hardware requirement of the terminal device, and/or send, to the terminal device, the first AI model represented in a first AI model format. The transceiver unit is further configured to send fourth information to the terminal device, where the fourth information includes a result of determining whether the first AI model meets the hardware requirement of the terminal device and/or the first AI model represented in the first AI model format. For more detailed descriptions of the processing unit and the transceiver unit, directly refer to related descriptions in the third aspect. For beneficial effects of the sixth aspect and the possible designs of the sixth aspect, refer to corresponding descriptions in the third aspect.

According to a seventh aspect, an embodiment of this application provides a communication apparatus. The communication apparatus includes an interface circuit and a processor, and the processor and the interface circuit are coupled to each other. The processor is configured to implement, by using a logic circuit or by executing code instructions, the method described in the first aspect or the possible designs of the first aspect. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to an eighth aspect, an embodiment of this application provides a communication apparatus. The communication apparatus includes an interface circuit and a processor, and the processor and the interface circuit are coupled to each other. The processor is configured to implement, by using a logic circuit or by executing code instructions, the method described in the second aspect or the possible designs of the second aspect. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a ninth aspect, an embodiment of this application provides a communication apparatus. The communication apparatus includes an interface circuit and a processor, and the processor and the interface circuit are coupled to each other. The processor is configured to implement, by using a logic circuit or by executing code instructions, the method described in the third aspect or the possible designs of the third aspect. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a tenth aspect, an embodiment of this application further provides a computer-readable storage medium. The computer-readable storage medium stores a computer program or readable instructions. When the computer program or the readable instructions is/are executed by a communication apparatus, the methods according to the foregoing aspects or the possible designs of the foregoing aspects are performed.

According to an eleventh aspect, an embodiment of this application provides a chip system. The chip system includes a processor, and may further include a memory. The memory is configured to store a program, instructions, or code. The processor is configured to execute the program, the instructions, or the code stored in the memory, to implement the methods according to the foregoing aspects or the possible designs of the foregoing aspects. The chip system may include a chip, or may include a chip and another discrete component.

According to a twelfth aspect, a computer program product including instructions is provided. When the computer program product is executed by a communication apparatus, the methods according to the foregoing aspects or the possible designs of the aspects are performed.

### BRIEF DESCRIPTION OF DRAWINGS

FIG. 1 is a schematic diagram of a system architecture according to an embodiment of this application;
FIG. 2 is a schematic diagram of a process in which a network device and a terminal device perform wireless communication by using an AI model according to an embodiment of this application;
FIG. 3 is a schematic flowchart 1 of an AI model transmission method according to an embodiment of this application;
FIG. 4 is a schematic flowchart of obtaining a first AI model by a terminal device based on obtaining method information according to an embodiment of this application;
FIG. 5 is a schematic flowchart 2 of an AI model transmission method according to an embodiment of this application;
FIG. 6 is a schematic flowchart of a method for indicating working mode configuration information by a network device to a terminal device according to an embodiment of this application;
FIG. 7 is a schematic flowchart 3 of an AI model transmission method according to an embodiment of this application;
FIG. 8 is a schematic flowchart of a method for determining a first AI model format with assistance of a server according to an embodiment of this application;
FIG. 9 is a schematic flowchart 4 of an AI model transmission method according to an embodiment of this application;
FIG. 10 is a schematic diagram 1 of a structure of a communication apparatus according to an embodiment of this application;
FIG. 11 is a schematic diagram 2 of a structure of a communication apparatus according to an embodiment of this application;
FIG. 12 is a schematic flowchart 5 of an AI model transmission method according to an embodiment of this application;
FIG. 13 is a schematic flowchart 6 of an AI model transmission method according to an embodiment of this application;
FIG. 14 is a schematic flowchart 7 of an AI model transmission method according to an embodiment of this application;
FIG. 15 is a schematic flowchart 8 of an AI model transmission method according to an embodiment of this application; and
FIG. 16 is a schematic flowchart 9 of an AI model transmission method according to an embodiment of this application.

### DESCRIPTION OF EMBODIMENTS

The following describes in detail embodiments of this application with reference to accompanying drawings.

This application provides an artificial intelligence AI model transmission method and an apparatus, to better apply an AI technology to a wireless communication system. The method and the apparatus are based on a same technical concept. Because the method and the apparatus have a similar problem-resolving principle, for implementations of the apparatus and the method, refer to each other, and no repeated description is provided.

In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In descriptions of this application, terms such as "first" and "second" are merely used for a purpose of distinguishing for description, and cannot be construed as indicating or implying relative importance or construed as indicating or implying a sequence.

The following describes in detail embodiments of this application with reference to the accompanying drawings.

The artificial intelligence AI model transmission method provided in embodiments of this application may be applied to a 5G communication system, for example, a 5G new radio (new radio, NR) system, and may be applied to various application scenarios of the 5G communication system, such as enhanced mobile broadband (enhanced mobile broadband, eMBB), ultra-reliable low-latency communication (ultra-reliable low-latency communication, URLLC), and enhanced machine-type communication (enhanced machine-type communication, eMTC). The artificial intelligence AI model transmission method provided in embodiments of this application may also be applied to various future evolved communication systems, for example, a 6th generation (6th generation, 6G) communication system, or a space-air-ground integrated communication system. The artificial intelligence AI model transmission method provided in embodiments of this application may be further applied to communication between base stations, communication between terminal devices, communication of internet of vehicles, internet of things, industrial internet, satellite communication, and the like. For example, the method may be applied to a device-to-device (Device-to-Device, D2D), vehicle-to-everything (vehicle-to-everything, V2X), or machine-to-machine (machine, M2M) communication system.

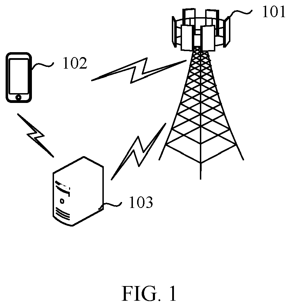

FIG. 1 shows a system architecture to which an embodiment of this application is applicable. A communication system architecture includes a network device 101 and a terminal device 102. The network device 101 provides a service for the terminal device 102 within a coverage range of the network device 101. The network device 101 provides wireless access for one or more terminal devices 102 within the coverage range of the network device 101. Optionally, the system architecture may further include a first device 103. The first device 103 may be a core network device or an application server. The first device 103 may also be referred to as an AI model server. The first device 103 may compile an AI model, and compile an AI model format into another AI model format. The first device 103 may further evaluate the AI model, that is, evaluate whether the AI model can meet a target hardware condition of the terminal device. The first device 103 may further store or maintain the AI model, and provide the AI model for the terminal device.

The network device 101 is a node in a radio access network (radio access network, RAN), and may be referred to as a base station, or may be referred to as a RAN node (or device). Currently, some examples of the network device 101 are a next-generation NodeB (next-generation NodeB, gNB), a next-generation evolved NodeB (next-generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). The network device 101 may alternatively be a satellite, and the satellite may also be referred to as a high-altitude platform, a high-altitude aircraft, or a satellite base station. The network device 101 may alternatively be another device that has a function of the network device. For example, the network device 101 may alternatively be a device that functions as a network device in device-to-device (device-to-device, D2D) communication, internet of vehicles communication, or machine-to-machine (machine-to-machine, M2M) communication. The network device 101 may alternatively be any possible network device in a future communication system. In some deployments, the network device 101 may include a central unit (central unit, CU) and a distributed unit (distributed unit, DU). The network device may further include an active antenna unit (active antenna unit, AAU). The CU implements some functions of the network device, and the DU implements some functions of the network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an radio access network (radio access network, RAN), or the CU may be classified into a network device in a core network (core network, CN). This is not limited in this application.

The terminal device 102 is also be referred to as user equipment (user equipment, UE), a mobile station (mobile station, MS), a mobile terminal (mobile terminal, MT), or the like, and is a device that provides voice and/or data connectivity for a user. For example, the terminal device 102 includes a handheld device, a vehicle-mounted device, and the like that have a wireless connection function. If the terminal device 102 is located in a vehicle (for example, placed in the vehicle or installed in the vehicle), the terminal device 102 may be considered as a vehicle-mounted device, and the vehicle-mounted device is also referred to as an on board unit (on board unit, OBU). Currently, the terminal device 102 may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot-air balloon, an uncrewed aerial vehicle, or an aircraft), or the like. Alternatively, the terminal device 102 may be another device that has a function of the terminal device. For example, the terminal device 102 may be a device that functions as a terminal device in device-to-device (device-to-device, D2D) communication, internet of vehicles communication, or machine-to-machine (machine-to-machine, M2M) communication. Particularly, when communication is performed between network devices, a network device that functions as the terminal device may also be considered as the terminal device.

By way of example but not limitation, in embodiments of this application, the terminal device 102 may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices, such as smart watches or smart glasses, that can implement complete or partial functions without depending on smartphones, and include devices, such as various smart bands, smart helmets, or smart jewelry for monitoring physical signs, that are dedicated to only one type of application function and need to collaboratively work with other devices such as smartphones.

In embodiments of this application, an apparatus configured to implement a function of the terminal device 102 is, for example, a chip, a radio transceiver, or a chip system. The apparatus configured to implement the function of the terminal device 102 may be installed, disposed, or deployed in the terminal device 102.

To help a person skilled in the art better understand the solutions provided in embodiments of this application, several concepts or terms in this application are first explained and described.

### (1) AI technology

AI is a scientific and technological capability of simulating a human cognitive capability through a machine. A core capability of AI is to make judgment or prediction based on a given input. AI applications can be divided into four parts: a perception capability, a cognitive capability, creativity, and intelligence. The perception capability includes, for example, image recognition, facial recognition, speech recognition, natural language processing, machine translation, or text conversion. The cognitive capability includes spam identification, credit risk analysis, intelligent natural disaster prediction and prevention, AI Go playing, or machine learning. The creativity includes, for example, AI composition, AI painting, or AI design. Intelligence refers to a capability of exploring reality and truth, differentiating between right and wrong, and guiding human beings to lead a meaningful life by deeply understanding truth of people, things, or objects. This field relates to human self-awareness, self-cognition, and values, and is the most difficult field for AI to imitate human beings.

### (2) AI model

There are various AI models. Different AI models may be applied to different application scenarios.

The AI model may be implemented based on a neural network model. An artificial neural network (artificial neural network, ANN) model is also referred to as a neural network (NN) model or a connection model (connection model). The neural network model is a typical representative of the AI model. The neural network model is a mathematical calculation model that imitates a behavior feature of a human brain neural network and performs distributed parallel information processing. A main task of the neural network model is to build a practical artificial neural network based on an application requirement by referring to a principle of the human brain neural network, implement a learning algorithm design that meets the application requirement, simulate an intelligent activity of a human brain, and then resolve a practical problem technically. A neural network implements, based on complexity of a network structure, a corresponding learning algorithm design by adjusting an interconnection relationship between a large quantity of internal nodes.

### (3) AI model format

An AI model may be represented in different formats at different levels from a design to a hardware-executable file. The AI model format may be understood as a format representing the AI model. Several example AI model formats are described below.

A first-type format is a model format output by a deep learning framework. The deep learning framework is, for example, MindSpore, TensorFlow, PyTorch, or PaddlePaddle (PaddlePaddle). The model format output by the deep learning framework is unrelated to running hardware of the AI model.

A second-type format is an intermediate representation (intermediate representation, IR) layer model format. The IR layer model format is unrelated to the deep learning framework and the running hardware of the AI model.

The first-type format and the second-type format each are an AI model format unrelated to the running hardware of the AI model, and may be collectively referred to as a high-layer representation or a high-layer format of the AI model.

A third-type format is a model format represented by an executable file. The executable file is a file that can be run on hardware. After the high-layer representation of the AI model is compiled for the running hardware of the AI model, an executable file related to specific running hardware may be obtained. The third-type format is a format related to the running hardware of the AI model, and may be referred to as a low-layer representation or a low-layer format of the AI model.

The high-layer representation is a format unrelated to the running hardware. In addition to the first-type format and the second-type format, the high-layer representation may be another AI model format unrelated to the running hardware. The low-layer representation may be an AI model format directly related to the running hardware. In addition to the model format represented by the foregoing executable file, the low-layer representation may be another AI model format related to the running hardware. In this application, the first-type format, the second-type format, and the third-type format are used as examples for description.

There may be a plurality of types of running hardware of the terminal device, for example, a central processing unit (central processing unit, CPU), a microprocessor (for example, a graphics processing unit, GPU), an embedded neural-network processing unit (neural-network processing unit, NPU), or a field-programmable gate array (field-programmable gate array, FPGA). If the terminal device supports heterogeneous computing, the running hardware may alternatively be a combination of the foregoing plurality of types. Heterogeneous computing means that an AI model is distributed and executed on a plurality of types of computing units. For example, the AI model is distributed and executed on three types of computing units: a CPU, a GPU, and an FPGA. Different types of running hardware may respectively correspond to model formats represented by different executable files. For example, the running hardware of the terminal device is a CPU of a specific vendor or type, and a model format represented by an executable file is a model format corresponding to the CPU. For another example, the running hardware of the terminal device is heterogeneity of a specific GPU and a specific FPGA, and model formats represented by executable files are model format corresponding to the GPU and a model format corresponding to the FPGA.

### (4) Wireless communication and AI

Based on a feature of a radio air interface, it is considered that AI may be combined with the radio air interface to improve wireless network performance. Example application scenarios are described below. AI-based channel estimation and signal detection is an example. The signal detection may be a process of extracting, from a radio channel, a received signal including interference noise. The channel estimation is a process of estimating a model parameter of an assumed channel model from the received signal. An AI-based end-to-end communication link design is another example. An AI-based channel state information (channel state information, CSI) feedback solution is another example. To be specific, CSI is encoded through a neural network, and then encoded CSI is fed back to the network device.

The AI-based CSI feedback solution is used as an example to describe a process in which a network device and a terminal device perform wireless communication by using an AI model.

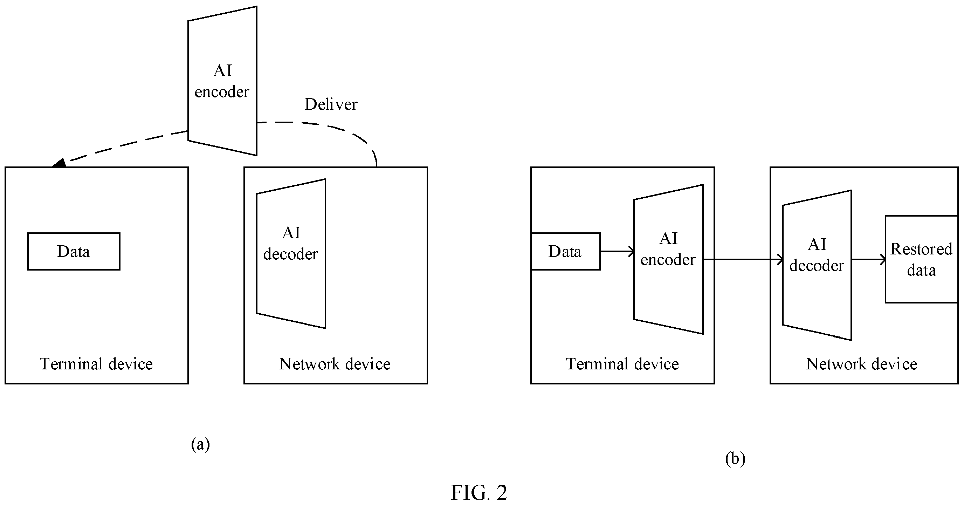

As shown in FIG. 2, in (a) in FIG. 2, the network device sends the AI model to the terminal device. In the AI-based CSI feedback solution, the AI model may also be referred to as an AI encoder. The terminal device receives the AI encoder from the network device, or the terminal device downloads the AI encoder from the network device. In another possible implementation solution, the terminal device may alternatively obtain an AI encoder from another device. The another device may be a core network device or an application server. In (b) in FIG. 2, the terminal device performs CSI encoding by using the AI encoder, and sends encoded data to the network device. Then, the network device restores a received data by using the AI model. The AI model used by the network device may be referred to as an AI decoder.

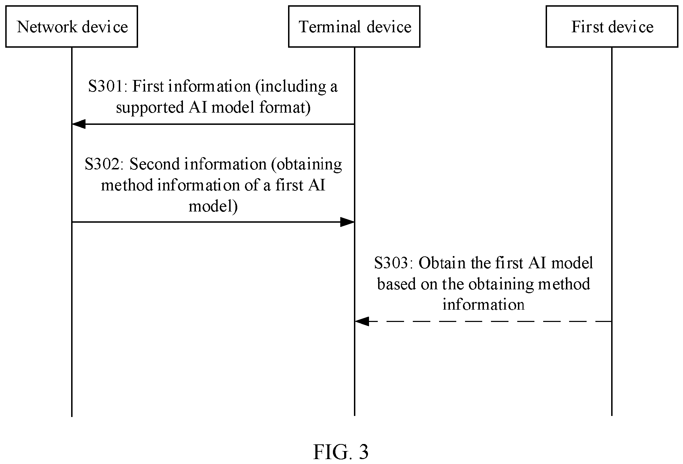

There are a plurality of types of AI model formats representing an AI model. Only when the AI model sent by the network device to the terminal device can be identified by the terminal device, the terminal device can use the AI model to execute a communication service. This means that the terminal device and the network device need to reach an agreement on an AI model format. Based on this, as shown in FIG. 3, an embodiment of this application provides an AI model transmission method. A procedure of the method is described below.

S301: A terminal device sends first information to a network device, and correspondingly, the network device receives the first information from the terminal device.

The first information includes an AI model format supported by the terminal device, and the AI model format supported by the terminal device includes a first AI model format.

S302: The network device sends second information to the terminal device, and correspondingly, the terminal device receives the second information from the network device.

The second information indicates obtaining method information of a first AI model. The first AI model is represented in the first AI model format, and the first AI model format is determined based on the first information, or the first AI model is applied to a first communication scenario.

In the embodiment in FIG. 3, the terminal device reports the supported AI model format to the network device, so that the network device can learn of the AI model format supported by the terminal device. In this way, the network device determines the first AI model format based on the AI model format supported by the terminal device, and the first AI model format is definitely the model format supported by the terminal device. The network device indicates, to the terminal device, the obtaining method information (or referred to as download information) of the first AI model represented in the first AI model format. In this way, the model format that is of the first AI model and that is downloaded by the terminal device based on the obtaining method information is definitely supported by the terminal device. This ensures that the terminal device and the network device reach an agreement on a model format of an AI model for a wireless communication service, and the terminal device can understand or identify the AI model format, so that feasibility of executing the communication service by using the AI model is ensured. The network device sends the obtaining method information of the first Al model to the terminal device, and then the terminal device can download the first AI model from a first device based on the obtaining method information. The first device may be a server or a core network device. In this way, the first device can store and maintain the AI model, and a quantity of first devices may be less than a quantity of network devices. This reduces maintenance costs, reduces overheads and power consumption of the network device, and improves performance of a communication system.

With reference to the embodiment in FIG. 3, some optional implementations are provided below.

Optionally, after S302, the method may further include S303.

S303: The terminal device obtains the first AI model based on the obtaining method information.

The obtaining method information may be a download address of the AI model, for example, may be an identifier of the first device, or may be a download link.

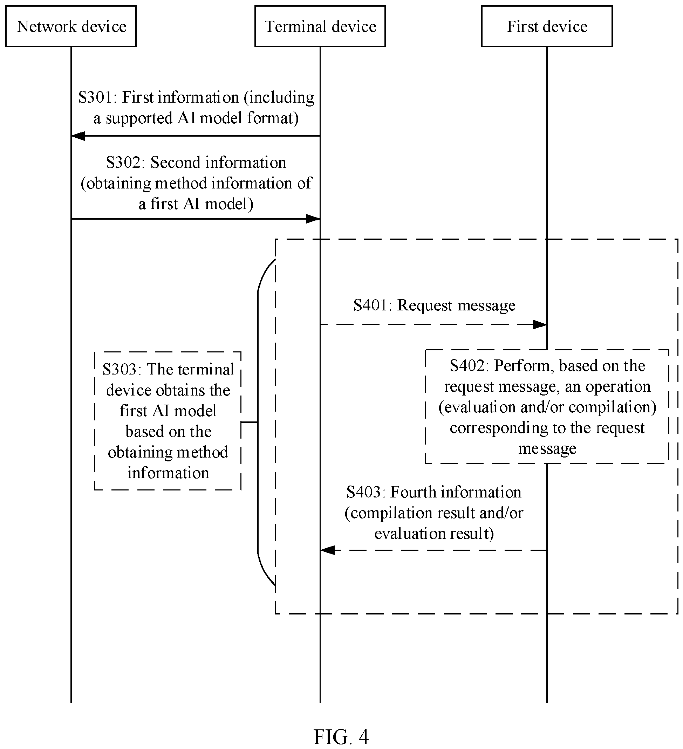

Based on the embodiment in FIG. 3, as shown in FIG. 4, that the terminal device obtains the first AI model based on the obtaining method information may be implemented by using the following steps.

S401: The terminal device sends a request message to the first device, and correspondingly, the first device receives the request message from the terminal device.

The request message is used to request the first device to determine whether the first AI model meets a hardware requirement of the terminal device. It may be understood that the request message is used to request the first device to evaluate the first AI model.

Alternatively, the request message may be used to request an AI model represented in the first AI model format.

Alternatively, the request message is used to request the first device to compile the AI model format.

Alternatively, the request message may be used to request a plurality of the foregoing several types. For example, the request message may be used to request the first device to determine whether the first AI model meets the hardware requirement of the terminal device, and may be used to request the AI model represented in the first AI model format.

Alternatively, the request message may indicate the first communication scenario.

The first device may be a core network device. In this case, when sending the request message to the core network device, the terminal device may send the request message to the core network device through a non-access stratum (NAS). The first device may be an application server. In this case, the terminal device may send the request message to the application server through an application layer.

S402: The first device performs, based on the request message, an operation corresponding to the request message.

If the request message is used to request the first device to determine whether the first AI model meets the hardware requirement of the terminal device, the first device determines, based on the request message, whether the first AI model meets the hardware requirement of the terminal device.

If the request message is used to request the AI model represented in the first AI model format, the first device determines, based on the request message, the first AI model represented in the first AI model format. The request message may carry an indication of the first AI model, and the indication of the first AI model indicates the first AI model that needs to be obtained by the terminal device. The first device may determine, from a plurality of stored AI models based on the indication of the first AI model in the request message, the first AI model represented in the first AI model format. The request message may also carry the first AI model format. In this case, the first device determines the first AI model represented in the first AI model format based on the first AI model format.

If the request message is used to request the first device to compile the AI model format, the first device compiles the first AI model format based on the request message, to obtain a low-layer representation AI model format. For example, the first AI model format is a high-layer representation AI model format, a model format output by a deep learning framework, or an intermediate representation IR layer model format. The compiled AI model format is the low-layer representation AI model format, for example, an AI model format represented by an executable file. A function of the first device is to compile the high-layer representation AI model format into the low-layer representation AI model format.

If the request message indicates the first communication scenario, the first device determines, based on the request message, the first AI model used by the terminal device in the first communication scenario.

S403: The first device sends fourth information to the terminal device, and the terminal device receives the fourth information from the first device.

If the request message is used to request the first device to determine whether the first AI model meets the hardware requirement of the terminal device, and the first device determines that the first AI model meets the hardware requirement of the terminal device, the fourth information indicates that the first AI model meets the hardware requirement of the terminal device.

If the request message is used to request the first device to determine whether the first AI model meets the hardware requirement of the terminal device, and the first device determines that the first AI model does not meet the hardware requirement of the terminal device, the fourth information indicates that the first AI model does not meet the hardware requirement of the terminal device.

If the request message is used to request the AI model represented in the first AI model format, the first device sends the first AI model to the terminal device. The fourth information includes the first AI model, or the fourth information is the first AI model, or the fourth information indicates the first AI model. It may be understood that, if the request message is used to request the AI model represented in the first AI model format, the first device may first determine whether the first AI model meets the hardware requirement of the terminal device. If the first AI model meets the hardware requirement of the terminal device, the first device sends the first AI model to the terminal device; or if the first AI model does not meet the hardware requirement of the terminal device, the first device does not send the first AI model, or may notify the terminal device that there is no AI model that meets the hardware requirement of the terminal device.

If the request message is used to request the first device to compile the AI model format, the first device sends a compiled low-layer representation AI model to the terminal device.

If the request message indicates the first communication scenario, the fourth information includes the first AI model used by the terminal device in the first communication scenario.

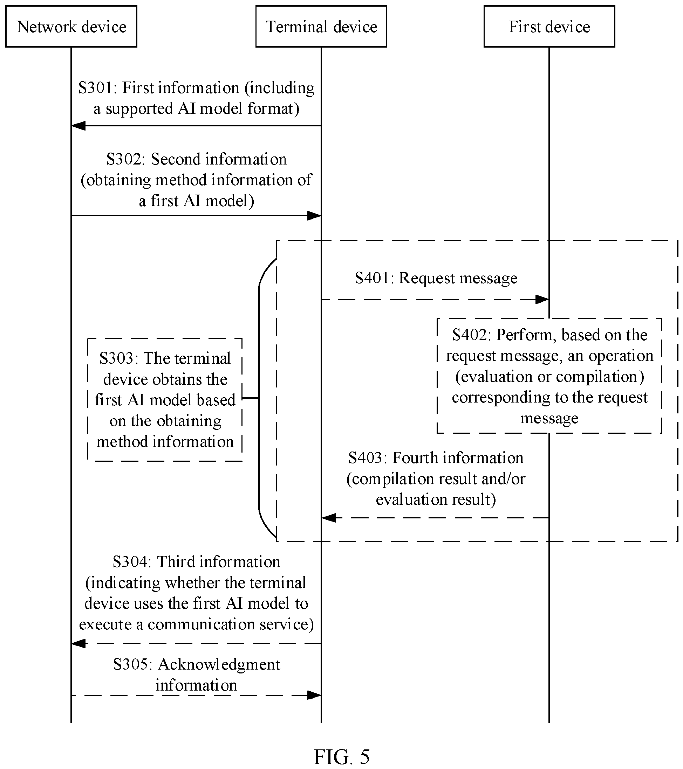

Optionally, as shown in FIG. 5, based on the embodiment in FIG. 3, after S303, the method may further include the following steps. The following steps may be further combined with the embodiment in FIG. 4, that is, performed after S403.

S304: The terminal device sends third information to the network device, and correspondingly, the network device receives the third information from the terminal device.

The third information indicates whether the terminal device uses the first AI model to execute the communication service.

When the steps are combined with the embodiment in FIG. 4, the terminal device may obtain the first AI model by performing S401 to S403, and may determine, based on the fourth information received from the first device, whether the first AI model matches a hardware capability of the terminal device. The terminal device determines, based on the fourth information, whether to use the first AI model to execute the communication service.

If the terminal device does not use the first AI model to execute the communication service, the terminal device may execute the communication service in a legacy communication mode. When the third information indicates that the terminal device does not use the first AI model to execute the communication service, it may also be understood that the third information indicates that the terminal device executes the communication service in the legacy communication mode.

S305: The network device returns acknowledgment information to the terminal device, and the terminal device receives the acknowledgment information from the network device.

The acknowledgment information may be response information of the third information. When the third information indicates that the terminal device uses the first AI model to execute the communication service, the acknowledgment information may indicate that the network device uses the first AI model to execute the communication service. When the third information indicates that the terminal device executes the communication service in the legacy communication mode, the acknowledgment information may indicate that the network device executes the communication service in the legacy communication mode.

The AI model includes a neural network structure, parameters (such as a weight and an offset) corresponding to operators in the neural network structure, code, or configuration. The AI model may include a large quantity of parameters and a large computing amount. In addition, there is usually a requirement on a latency for the communication service. When the network device and the terminal device perform wireless communication by using an AI technology, a resource and a computing capability of the terminal device need to support running of the AI model, including that storage space of the terminal device can accommodate storage of the AI model, a technical capability can support completion of AI model computing within a required latency, and energy consumed by AI model computing does not exceed a limit of the terminal device. If the resource and the computing capability of the terminal device cannot support running of the AI model, the AI technology cannot be used. Based on this, the first AI model may need to meet some hardware requirements of the terminal device. When determining the first AI model format, the network device also needs to consider whether the AI model represented in the first AI model format meets the some hardware requirements of the terminal device.

In the embodiment in FIG. 3, the first AI model format is determined based on the first information. The following describes an optional implementation in which the network device determines the first AI model format based on the first information.

Parameters that may be included in the first information reported by the terminal device are first described by using examples. The first information may also be referred to as AI capability information of the terminal device.

The first information may further include a first threshold. The first threshold is a maximum latency of a part executed by an AI model when the AI model is used by the terminal device to execute a communication service. For example, one communication service includes a plurality of parts. In this case, the terminal device uses the AI model to execute one or more of the plurality of parts in the communication service. When the terminal device communicates with the network device, the terminal device may perform CSI encoding by using the AI model, and the network device may perform CSI decoding by using the AI model. In this communication scenario, the first threshold indicates a maximum latency corresponding to a case in which the terminal device performs CSI encoding by using the AI model. If a latency corresponding to a case in which the terminal device performs CSI encoding by using the first AI model exceeds the maximum latency indicated by the first threshold, it is considered that a latency requirement cannot be met when the first AI model is used to execute the communication service.

The first information may further include a second threshold. The second threshold is maximum power consumption of a part executed by an AI model when the AI model is used by the terminal device to execute a communication service. As described above, the communication service includes some services executed by the AI model, and the second threshold is maximum power consumption of the some services executed by the AI model.

The first information further includes indication information of an AI model compilation capability. The AI model compilation capability includes a capability of compiling and converting the AI model format.

The first information further includes a hardware capability of the terminal device. The hardware capability may be one or a combination of the following: a hardware model, a hardware version, a storage capability, a computing capability, a processor frequency, or a capability of supporting heterogeneous computing.

The network device may determine the first AI model format based on the first information and the parameters carried in the first information. First, the first AI model represented in the first AI model format needs to meet a hardware requirement of the terminal device. When determining that the first AI model represented in the first AI model format meets the hardware requirement of the terminal device, the network device sends the second information to the terminal device. Alternatively, if the network device cannot determine whether the first AI model represented in the first AI model format meets the hardware requirement of the terminal device, after the network device sends the second information to the terminal device, the terminal device requests the first device to determine whether the first AI model meets the hardware requirement of the terminal device.

If the first information includes the first threshold, the network device may determine whether the first AI model meets a first hardware requirement of the terminal device. The first hardware requirement is a latency requirement indicated by the first threshold. When the terminal device uses the first AI model to execute the communication service, if a latency generated through computing of the first AI model does not exceed the first threshold, it indicates that the first AI model meets the latency requirement indicated by the first threshold; or if a latency generated through computing of the first AI model exceeds the first threshold, it indicates that the first AI model does not meet the latency requirement indicated by the first threshold. If the terminal device has the capability of supporting heterogeneous computing, a plurality of computing units of heterogeneous computing may correspond to model files of a plurality of first AI models. One computing unit corresponds to a model file of one first AI model, or the plurality of computing units of heterogeneous computing correspond to a model file of one first AI model. In this application, heterogeneous computing may mean that a computing task of the AI model is divided into a plurality of subtasks, and computing of the plurality of subtasks is separately performed in appropriate running hardware. These computing usually may be performed in a parallel mode, but may alternatively be performed in a serial mode. In this way, a latency is determined based on a case in which all computing of the plurality of subtasks of the AI model is completed. In a case of heterogeneous computing, the network device needs to determine whether a latency generated when the terminal device completes computing of the AI model on all computing units exceeds the first threshold. If the latency generated when the terminal device completes computing of the AI model on all computing units does not exceed the first threshold, it indicates that the first AI model meets the latency requirement indicated by the first threshold; or if the latency generated when the terminal device completes computing of the AI model on all computing units exceeds the first threshold, it indicates that the first AI model does not meet the latency requirement indicated by the first threshold.

If the first information includes the second threshold, the network device may determine whether the first AI model meets a first hardware requirement of the terminal device. The first hardware requirement is a power consumption requirement indicated by the second threshold. When the terminal device uses the first AI model to execute the communication service, if power consumption generated through computing of the first AI model does not exceed the second threshold, it indicates that the first AI model meets the power consumption requirement indicated by the second threshold; or if power consumption generated through computing of the first AI model exceeds the second threshold, it indicates that the first AI model does not meet the power consumption requirement indicated by the second threshold. If the terminal device has the capability of supporting heterogeneous computing, the network device needs to determine whether total power consumption generated when the terminal device executes the communication service separately on the plurality of computing units of heterogeneous computing exceeds the second threshold. When the total power consumption generated by using the plurality of computing units does not exceed the second threshold, it indicates that the first AI model meets the power consumption requirement indicated by the second threshold; or when the total power consumption generated by using the plurality of computing units exceeds the second threshold, it indicates that the first AI model does not meet the power consumption requirement indicated by the second threshold.

If the first information includes the storage capability of the terminal device, the network device may determine whether the first AI model meets a second hardware requirement of the terminal device. The second hardware requirement is a storage space requirement indicated by the storage capability. When storage space occupied by the first AI model is not greater than storage space indicated by the storage capability, it indicates that the first AI model meets the storage space requirement indicated by the storage capability; or when storage space occupied by the first AI model is greater than storage space indicated by the storage capability, it indicates that the first AI model does not meet the storage space requirement indicated by the storage capability.

When determining whether the first AI model meets the first hardware requirement of the terminal device, that is, determining whether the first AI model meets the latency requirement indicated by the first threshold and the power consumption requirement indicated by the second threshold, the network device may determine a computing capability (namely, computing power) of the terminal device based on the hardware capability indicated by the first information, and further determine whether the computing power of the terminal device can support running of the first AI model, that is, whether the latency requirement or the power consumption requirement is met when the first AI model is used based on the computing power of the terminal device.

Based on information indicating that the first AI model meets the hardware requirement of the terminal device, if the network device determines that the terminal device has the AI model compilation capability, the network device may determine that the first AI model is a high-layer representation AI model, for example, a model format output by a deep learning framework or an intermediate representation layer model format. If the network device determines that the terminal device does not have the AI model compilation capability, the network device may determine that the first AI model is a low-layer representation AI model, for example, a model format represented by an executable file. The AI model compilation capability includes a capability of compiling and converting an AI model format, for example, compiling and converting the high-layer representation AI model into the low-layer representation AI model. When the first information includes indication information of the AI model compilation capability, the network device may determine, based on the first information, that the terminal device has the AI model compilation capability. If the first information does not include indication information of the AI model compilation capability or the first information indicates that the terminal device does not have the AI model compilation capability, the network device may determine that the terminal device does not have the AI model compilation capability.

The network device may not expect the AI model that to be obtained by the terminal device. In other words, the network device does not expect the AI model to be exposed. The low-layer representation AI model cannot be easily decompiled to obtain an original AI model. The low-layer representation AI model is more secure than the high-layer representation AI model. The high-layer representation AI model is more easily identified or obtained by the terminal device than the low-layer representation AI model. In other words, the high-layer representation AI model is more easily exposed than the low-layer representation AI model. The network device may have different sensitivities to exposure of the AI model. When a sensitivity of the network device to exposure of the AI model is less than a specified threshold, or when the network device is insensitive to exposure of the AI model, the network device determines that the first AI model is the high-layer representation AI model. When a sensitivity of the network device to exposure of the AI model is not less than a specified threshold, or when the network device is sensitive to exposure of the AI model, the network device determines that the first AI model is the low-layer representation AI model.

The foregoing determining bases may also be used in combination. For example, based on the information indicating that the first AI model meets the hardware requirement of the terminal device, if the sensitivity of the network device to exposure of the AI model is less than the specified threshold, or the network device is insensitive to exposure of the AI model, and the terminal device has the AI model compilation capability, the network device may determine that the first AI model is the high-layer representation AI model.

In S302, the network device sends the second information to the terminal device, where the second information indicates the obtaining method information of the first AI model. It may be understood that the network device indicates a working mode to the terminal device, and the working mode is an AI mode. The AI mode indicates that the terminal device uses the first AI model to execute the communication service. Optionally, the network device may send working mode configuration information to the terminal device. The working mode configuration information is used to configure a working mode in which the terminal device executes the communication service, and the working mode is an AI mode. The working mode configuration information and the second information may be carried in same signaling, or may be carried in different signaling.

In the foregoing descriptions, the network device determines the first AI model format based on the information indicating that the first AI model meets the hardware requirement of the terminal device. If the first AI model cannot meet the hardware requirement of the terminal device, the network device may indicate the terminal device to execute the communication service in a legacy (legacy) communication mode. If an error occurs in information communication between any two of the terminal device, the network device, or the first device, a system executes the communication service in the legacy (legacy) communication mode based on an indication of the network device, or a system works in the legacy communication mode by default. For example, if the network device cannot identify the first information reported by the terminal device, the network device executes the communication service in the legacy communication mode, and the network device may indicate the terminal device to execute the communication service in the legacy communication mode.

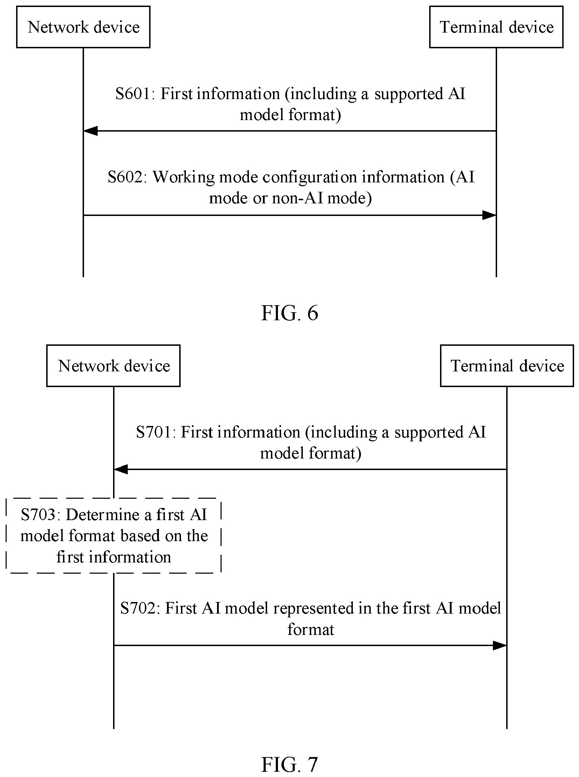

A method for indicating, by the network device, working mode configuration information to the terminal device may be described in an embodiment in FIG. 6.

S601: A terminal device sends first information to a network device, and correspondingly, the network device receives the first information from the terminal device.

The first information includes an AI model format supported by the terminal device, and the AI model format supported by the terminal device includes a first AI model format.

This step is the same as S301. For details, refer to related descriptions of S301.

S602: The network device sends working mode configuration information to the terminal device, and correspondingly, the terminal device receives the working mode configuration information from the network device.

The working mode configuration information is used to configure a working mode in which the terminal device executes a communication service. The working mode includes an AI mode or a non-AI mode. The AI mode indicates that the communication service is executed by using a first AI model, and the non-AI mode indicates that the communication service is executed in a legacy communication mode.

When the working mode configured by using the working mode configuration information is the AI mode, the terminal device may use the first AI model to execute the communication service; or when the working mode configured by using the working mode configuration information is the non-AI mode, the terminal device may execute the communication service in the legacy communication mode.

When the working mode is the AI mode, the working mode configuration information may further include effective time of the first AI model. The terminal device may use, within the effective time based on the effective time of the first AI model, the first AI model to execute the communication service.

When the network device cannot determine whether the first AI model format can match a capability of the terminal device, or the network device does not have the AI model represented in the first AI model format, the terminal device may request, by using the embodiment in FIG. 4, the first AI model from the first device or request the first device to evaluate whether the first AI model matches the capability of the terminal device. In this case, the request message sent by the terminal device to the first device may carry the parameters carried in the foregoing first information. For example, the request message includes one or more of the following: the first threshold, the second threshold, the hardware model, the hardware version, the storage capability, the computing capability, or the capability of supporting heterogeneous computing. For a method for determining, by the first device based on the request message, whether the first Al model meets a hardware requirement of the terminal device, refer to the method for determining, by the network device, whether the first AI model meets the hardware requirement of the terminal device. Details are not described herein again. For example, the request message may carry the first threshold. When the first device determines whether the first AI model meets the hardware requirement of the terminal device, if a latency of a part executed by the first AI model when the first AI model is used to execute a communication service does not exceed the first threshold, the first device determines that the first AI model meets a latency requirement of the terminal device; or if a latency of a part executed by the first AI model when the first AI model is used to execute a communication service exceeds the first threshold, the first device determines that the first AI model does not meet a latency requirement of the terminal device. For another example, the request message carries the second threshold. When the first device determines whether the first AI model meets the hardware requirement of the terminal device, if power consumption of a part executed by the first AI model when the first AI model is used to execute a communication service does not exceed the second threshold, the first device determines that the first AI model meets a power consumption requirement of the terminal device; or if power consumption of a part executed by the first AI model when the first AI model is used to execute a communication service exceeds the second threshold, the first device determines that the first AI model does not meet a power consumption requirement of the terminal device. For another example, when the first device determines whether the first AI model meets the hardware requirement of the terminal device, if storage space occupied by the first AI model does not exceed storage space indicated by the storage capability of the terminal device, the first device determines that the first AI model meets a storage space requirement of the terminal device; or if storage space occupied by the first AI model exceeds storage space indicated by the storage capability of the terminal device, the first device determines that the first AI model does not meet a storage space requirement of the terminal device.

When the request message is used to request the AI model represented in the first AI model format, where the first AI model format is a low-layer representation model format. In this case, the first device may compile a high-layer representation AI model format, and convert a compiled high-layer representation AI model format into the low-layer representation model format. The request message may carry hardware information of the terminal device, for example, the hardware model of the terminal device and the hardware version of the terminal device. The first device compiles, based on the hardware information of the terminal device, a high-layer representation AI model format, and converts the compiled high-layer representation AI model format into the low-layer representation model format. The first device may further determine whether the compiled low-layer representation model format meets the hardware requirement of the terminal device. When the compiled low-layer representation model format meets the hardware requirement of the terminal device, the first device sends fourth information to the terminal device. The fourth information indicates the compiled low-layer representation model format (namely, the first AI model format). If the first device determines that the first AI model meets the storage space requirement, the fourth information may further indicate remaining space of the storage space. When the compiled low-layer representation model format does not meet the hardware requirement of the terminal device, the first device may send fourth information to the terminal device. The fourth information indicates that the first AI model does not meet the hardware requirement of the terminal device, and the fourth information may also indicate the terminal device to execute the communication service in the legacy communication mode.

Based on a same technical concept as the embodiment in FIG. 3, as shown in FIG. 7, an embodiment of this application further provides another AI model transmission method. A procedure of the method is described below.

S701: A terminal device sends first information to a network device, and correspondingly, the network device receives the first information from the terminal device.

The first information includes an AI model format supported by the terminal device, and the AI model format supported by the terminal device includes a first AI model format.

Step S701 is the same as step S301. For details, refer to the descriptions of S301.

S702: The network device sends, to the terminal device, a first AI model represented in the first AI model format, and correspondingly, the terminal device receives, from the network device, the first AI model represented in the first AI model format.

The first AI model format is determined based on the first information.

After S701 and before S702, the method further includes S703.

S703: The network device determines the first AI model format based on the first information received in S701.

For a specific manner of determining, by the network device, the first Al model format based on the first information, refer to the descriptions of determining, by the network device, the first AI model format based on the first information in the embodiment in FIG. 3. For a specific manner of determining, by the network device based on the first information, whether the first AI model meets a hardware requirement of the terminal device, refer to related descriptions in the embodiment in FIG. 3. For example, the first information includes a first threshold. In this case, the network device determines, based on the first threshold, whether the first AI model meets a latency requirement. The first information includes a second threshold. In this case, the network device determines, based on the second threshold, whether the first AI model meets a power consumption requirement. The first information includes a storage capability. In this case, the network device determines, based on the storage capability, whether the first AI model meets a storage space requirement indicated by the storage capability.

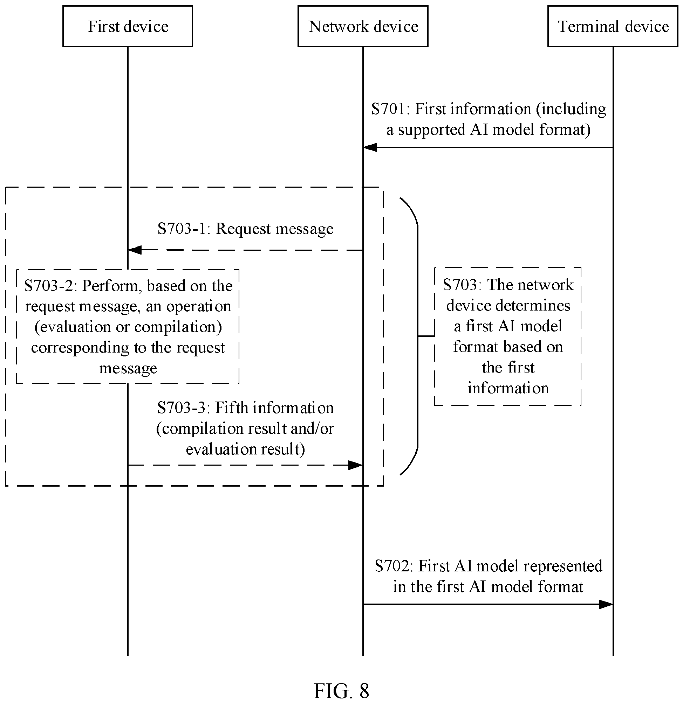

If the network device cannot determine whether the first AI model represented in the first AI model format meets the hardware requirement of the terminal device, the network device may request a first device to determine whether the first AI model meets the hardware requirement of the terminal device; or the network device may request a first device to compile and convert the AI model format. In conclusion, the network device may determine the first AI model format with assistance of the first device. Optionally, as shown in FIG. 8, a method for determining the first AI model format with assistance of the first device may be implemented by using the following steps.

S703-1: The network device sends a request message to the first device, and correspondingly, the first device receives the request message from the network device.

The request message is used to request the first device to determine whether the first AI model meets the hardware requirement of the terminal device, or the request message is used to request the first AI model format.

S703-2: The first device performs, based on the request message, an operation corresponding to the request message.

If the request message is used to request the first device to determine whether the first AI model meets the hardware requirement of the terminal device, the first device determines, based on the request message, whether the first AI model meets the hardware requirement of the terminal device.

If the request message is used to request the first AI model format, the first device determines the first AI model format based on the request message. For example, the first device compiles and converts a second AI model format into the first AI model format based on the request message. The second AI model format is a high-layer representation AI model format, for example, a model format output by a deep learning framework, or an intermediate representation IR layer model format. The first AI model format is a low-layer representation AI model format, for example, an AI model format represented by an executable file. A function of the first device is to compile the high-layer representation AI model format into the low-layer representation AI model format. In this case, the request message may include hardware information of the terminal device, for example, a hardware model and a hardware version. The low-layer representation AI model format is related to hardware of the terminal device. In this way, the first device performs compilation based on the hardware information of the terminal device, to obtain a more accurate compilation result.

S703-3: The first device sends fifth information to the network device, and the network device receives the fifth information from the first device.

If the request message is used to request the first device to determine whether the first AI model meets the hardware requirement of the terminal device, and the first device determines that the first AI model meets the hardware requirement of the terminal device, the fifth information indicates that the first AI model meets the hardware requirement of the terminal device.

If the request message is used to request the first device to determine whether the first AI model meets the hardware requirement of the terminal device, and the first device determines that the first AI model does not meet the hardware requirement of the terminal device, the fifth information indicates that the first AI model does not meet the hardware requirement of the terminal device.

If the request message is used to request the first AI model format, the first device sends the first AI model represented in the first AI model format to the terminal device. The fifth information includes the first AI model, or the fifth information is the first AI model, or the fifth information indicates the first AI model.

For a method for determining, by the first device, whether the first AI model meets the hardware requirement of the terminal device, refer to the determining method of the first device in the embodiment in FIG. 3. Details are not described herein again. If the request message sent by the network device to the first device is used to request the first device to determine whether the first AI model meets the latency requirement, the request message may carry the first threshold, and the first device determines, based on the first threshold, whether the first AI model meets the latency requirement. If the request message sent by the network device to the first device is used to request the first device to determine whether the first AI model meets the power consumption requirement, the request message may carry the second threshold, and the first device determines, based on the second threshold, whether the first AI model meets the power consumption requirement. If the request message sent by the network device to the first device is used to request the first device to determine whether the first AI model meets the storage space requirement, the request message may carry the storage capability, and the first device determines, based on the first threshold, whether the first AI model meets the storage space requirement. The request message may further include one or more of the following: the AI model format supported by the terminal device, the hardware model, the hardware version, the storage capability, a computing capability, or a capability of supporting heterogeneous computing. The first device determines, based on a hardware capability of the terminal device in the request message, whether the first AI model meets the hardware requirement of the terminal device. The first device may further compile and convert, based on the request message, the second AI model format into the first AI model format that conforms to the hardware. The second AI model format is a high-layer representation AI model format, for example, a model format output by a deep learning framework, or an intermediate representation IR layer model format. The first AI model format is a low-layer representation AI model format, for example, an AI model format represented by an executable file. A function of the first device is to compile the high-layer representation AI model format into the low-layer representation AI model format related to the hardware.

That the network device sends, to the terminal device, the first AI model represented in the first AI model format in S702 may be understood as that the network device indicates a working mode to the terminal device, where the working mode is an AI mode. Optionally, the network device may send working mode configuration information to the terminal device. The working mode configuration information is used to configure a working mode in which the terminal device executes a communication service, and the working mode is an AI mode. The working mode configuration information and the first AI model format may be carried in same signaling, or may be carried in different signaling.

If the network device determines that the first AI model cannot meet the hardware requirement of the terminal device, or the network device determines, by using the first device, that the first AI model cannot meet the hardware requirement of the terminal device, the network device may indicate the terminal device to execute the communication service in a legacy (legacy) communication mode. If an error occurs in information communication between any two of the terminal device, the network device, or the first device, for example, the network device or the first device cannot identify the first information reported by the terminal device, the network device or the first device may indicate the terminal device to execute the communication service in a legacy (legacy) communication mode. A method for indicating, by the network device, working mode configuration information to the terminal device may be described in an embodiment in FIG. 6. For details, refer to the foregoing descriptions in the embodiment in FIG. 6. Details are not described herein again.

That the network device determines the first AI model with assistance of the first device is described in the embodiment in FIG. 8. When evaluating whether the first AI model meets the hardware requirement of the terminal device, the first device may compile and convert the first AI model into a low-layer representation AI model, and then perform determining. Because the low-layer representation AI model can better reflect the hardware capability, a determining result is more accurate.

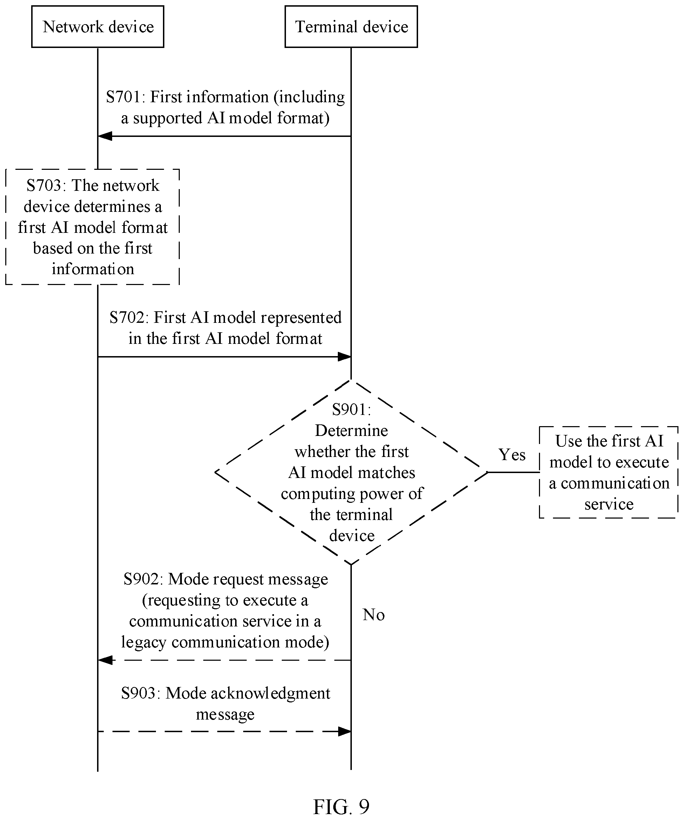

In a possible design, in S703, the network device determines the first AI model format based on the first information. In this case, if the network device evaluates, based on the high-layer representation AI model, whether the hardware requirement of the terminal device is met, an evaluation result may be inaccurate. As shown in FIG. 9, after the network device sends, to the terminal device, the first AI model represented in the first AI model format, and the terminal device receives, from the network device, the first AI model represented in the first AI model format in S702, the following steps may be further performed.

S901: The terminal device determines whether the first AI model matches computing power of the terminal device. If the terminal device determines that the first AI model matches the computing power of the terminal device, the terminal device uses the first AI model to execute the communication service; or if the terminal device determines that the first AI model does not match the computing power of the terminal device, the terminal device performs S902.

Determining whether the first AI model matches the computing power of the terminal device is determining whether the first AI model meets the hardware requirement of the terminal device. For example, when a latency of a part executed by the first AI model when the first AI model is used to execute a communication service does not exceed the first threshold, the terminal device determines that the first AI model meets the latency requirement of the terminal device; or when a latency of a part executed by the first AI model when the first AI model is used to execute a communication service exceeds the first threshold, the terminal device determines that the first AI model does not meet the latency requirement of the terminal device. The first threshold is a maximum latency of a part executed by an AI model when the AI model is used by the terminal device to execute a communication service.

For another example, when power consumption of a part executed by the first AI model when the first AI model is used to execute a communication service does not exceed the second threshold, the terminal device determines that the first AI model meets the power consumption requirement of the terminal device; or when power consumption of a part executed by the first AI model when the first AI model is used to execute a communication service exceeds the second threshold, the terminal device determines that the first AI model does not meet the power consumption requirement of the terminal device. The second threshold is maximum power consumption of a part executed by an AI model when the AI model is used by the terminal device to execute a communication service.

For another example, when storage space occupied by the first AI model does not exceed storage space indicated by the storage capability of the terminal device, the terminal device determines that the first AI model meets the storage space requirement of the terminal device; or when storage space occupied by the first AI model exceeds storage space indicated by the storage capability of the terminal device, the terminal device determines that the first AI model does not meet the storage space requirement of the terminal device.

Certainly, when the terminal device has the capability of supporting heterogeneous computing and determines whether the first AI model matches the computing power of the terminal device, a computing latency requirement, a power consumption requirement, or a storage requirement for a plurality of computing units needs to be comprehensively considered. For details, refer to the foregoing determining method of the network device corresponding to the case in which the terminal device has the capability of supporting heterogeneous computing.

Optionally, when determining whether the first AI model matches the computing power of the terminal device, the terminal device may first compile the AI model, and convert the first AI model into a low-layer representation AI model. For example, when the first AI model is a high-layer representation AI model, for example, a model format output by the deep learning framework, or an intermediate representation IR layer model format, the terminal device compiles and converts the high-layer representation AI model into the low-layer representation AI model, for example, a model format represented by an executable file. A specific manner of determining, by the terminal device, whether the converted low-layer representation AI model matches the computing power of the terminal device may be actually executing the first AI model to obtain information such as a latency and power consumption, or may be referring to the method for determining, by the terminal device, whether the first AI model meets the hardware requirement of the terminal device. Details are not described herein.

S902: When the first AI model does not meet the hardware requirement of the terminal device, the terminal device sends a mode request message to the network device, where the mode request message is used to request to execute the communication service in the legacy communication mode. Correspondingly, the network device receives the mode request message from the terminal device.

Optionally, the method may further include S903.

S903: The network device sends a mode acknowledgment message to the terminal device, where the mode acknowledgment message indicates acknowledgement of executing the communication service in the legacy communication mode. Correspondingly, the terminal device receives the mode acknowledgment message from the network device.

The terminal device determines whether the first AI model matches the computing power of the terminal device, to obtain a more accurate determining result than a determining result of the network device or the first device.

It may be understood that, to implement functions in the foregoing embodiments, the network device and the terminal device include corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on a particular application and a design constraint of the technical solutions.

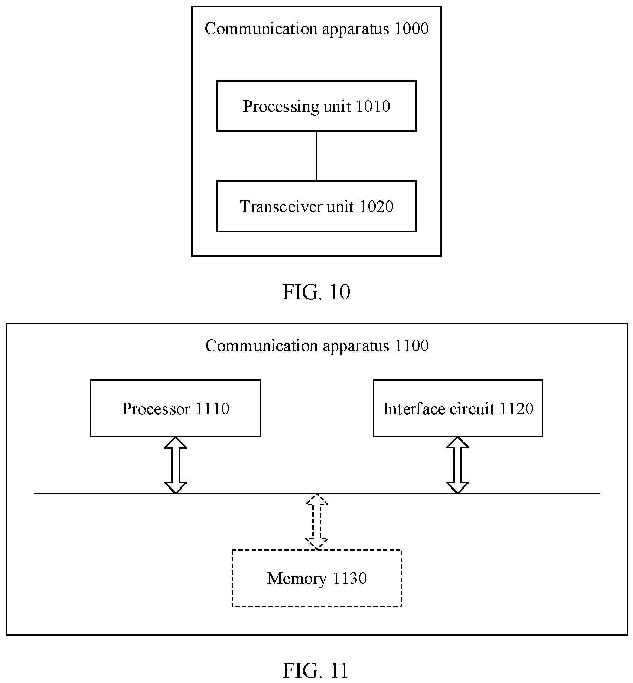

FIG. 10 and FIG. 11 each are a schematic diagram of a structure of a possible communication apparatus according to an embodiment of this application. These communication apparatuses may be configured to implement functions of a terminal device, a network device, or a first device in the foregoing method embodiments. Therefore, beneficial effects of the foregoing method embodiments can also be achieved. In this embodiment of this application, the communication apparatus may be a terminal device, a network device, or a first device, or may be a module (for example, a chip) used in a terminal device, a network device, or a first device.

As shown in FIG. 10, a communication apparatus 1000 includes a processing unit 1010 and a transceiver unit 1020. The processing unit 1010 is configured to invoke the transceiver unit 1020 to receive information from another communication apparatus or send information to another communication apparatus. The transceiver unit 1020 may further include a receiving unit and a sending unit. The receiving unit is configured to receive the information from the another communication apparatus, and the sending unit is configured to send the information to the another communication apparatus. The communication apparatus 1000 is configured to implement functions of the terminal device or the network device in the method embodiments shown in FIG. 3, FIG. 4, FIG. 5, FIG. 6, FIG. 7, FIG. 8, and FIG. 9. The embodiments in FIG. 4 and FIG. 5 are based on the embodiment in FIG. 3, the embodiment in FIG. 8 is based on the embodiment in FIG. 7, the embodiment in FIG. 9 is based on the embodiment in FIG. 7, and the embodiment in FIG. 6 is based on the embodiment in FIG. 3 or FIG. 7. Operations separately performed by the transceiver unit 1020 and the processing unit 1010 are described below by using the embodiment in FIG. 3 and the embodiment in FIG. 7 as examples. For operations performed by the two units in another embodiment, refer to the method embodiments.

When the communication apparatus 1000 is configured to implement a function of the terminal device in the method embodiment shown in FIG. 3, the transceiver unit 1020 is configured to send first information to a network device, where the first information includes an AI model format supported by the terminal device, and the AI model format supported by the terminal device includes a first AI model format; and the transceiver unit 1020 is further configured to receive second information from the network device, where the second information indicates obtaining method information of a first AI model represented in the first AI model format, and the first AI model format is determined based on the first information. When the communication apparatus 1000 is configured to implement a function of the network device in the method embodiment shown in FIG. 3, the transceiver unit 1020 is configured to receive first information from a terminal device, where the first information includes an AI model format supported by the terminal device, and the AI model format supported by the terminal device includes a first AI model format; and the transceiver unit 1020 is further configured to send second information to the terminal device, where the second information indicates obtaining method information of a first AI model represented in the first AI model format, and the first AI model format is determined based on the first information. When the communication apparatus 1000 is configured to implement a function of the first device in the method embodiment shown in FIG. 3, the transceiver unit 1020 is configured to receive a request message from a terminal device; the processing unit 1010 is configured to determine, based on the request message, whether a first AI model meets a hardware requirement of the terminal device; or the processing unit 1010 is configured to determine, based on the request message, a first AI model represented in a first AI model format; and the transceiver unit 1020 is further configured to send fourth information to the terminal device, where the fourth information includes a result of determining whether the first AI model meets the hardware requirement of the terminal device, and/or the first AI model represented in the first AI model format.

When the communication apparatus 1000 is configured to implement a function of the terminal device in the method embodiment shown in FIG. 7, the transceiver unit 1020 is configured to send first information to a network device, where the first information includes an AI model format supported by the terminal device, and the AI model format supported by the terminal device includes a first AI model format; and the transceiver unit 1020 is further configured to receive, from the network device, a first AI model represented in the first AI model format, where the first AI model format is determined based on the first information. When the communication apparatus 1000 is configured to implement a function of the network device in the method embodiment shown in FIG. 7, the transceiver unit 1020 is configured to receive first information from a terminal device, where the first information includes an AI model format supported by the terminal device; and the transceiver unit 1020 is further configured to send, to the terminal device, a first AI model represented in a first AI model format, where the first AI model format is determined based on the first information. When the communication apparatus 1000 is configured to implement a function of the first device in the method embodiment shown in FIG. 3, the transceiver unit 1020 is configured to receive a request message from a network device; the processing unit 1010 is configured to determine, based on the request message, whether a first AI model meets a hardware requirement of a terminal device; or the processing unit 1010 is configured to determine, based on the request message, a first AI model represented in a first AI model format; and the transceiver unit 1020 is further configured to send fourth information to the terminal device, where the fourth information includes a result of determining whether the first AI model meets the hardware requirement of the terminal device, and/or the first AI model represented in the first AI model format.

For more detailed descriptions of the processing unit 1010 and the transceiver unit 1020, directly refer to related descriptions in the method embodiments shown in FIG. 3 and FIG. 7. Details are not described herein again.

Based on a same technical concept, as shown in FIG. 11, an embodiment of this application further provides a communication apparatus 1100. The communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to: store instructions executed by the processor 1110, or store input data required for running instructions by the processor 1110, or store data generated after the processor 1110 runs instructions.

When the communication apparatus 1100 is configured to implement the methods shown in FIG. 3, FIG. 4, FIG. 5, FIG. 6, FIG. 7, FIG. 8, and FIG. 9, the processor 1110 is configured to implement a function of the processing unit 1010, and the interface circuit 1120 is configured to implement a function of the transceiver unit 1020.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the network device or the terminal device. Certainly, the processor and the storage medium may alternatively exist as discrete components in the network device or the terminal device.

In embodiments of this application, the first device may be a server or a core network element. The first device may be an independent device, or may be a device formed by combining functional modules of two network elements. A function implemented by the first device is completed jointly by a first network element and a second network element. The first network element may be configured to implement an evaluation and/or compilation function, and the second network element is configured to store a model. For example, the first network element may be a network element having a network data analytics function (Network Data Analytics Function, NWDAF), the second network element may be a network element having a model storage function, and the second network element may be a core network element or an application server.

Based on the embodiment in FIG. 3, when the terminal device obtains a first AI model from the first device, the terminal device may send a request message to the first network element, the first network element performs, based on the request message, an operation corresponding to the request message, and the first network element may send a model request message to the second network element. The second network element returns the first AI model to the first network element, and the first network element returns the first AI model to the terminal device.

Similarly, based on the embodiment in FIG. 8, when the network device obtains a first AI model from the first device, the network device may send a request message to the first network element, and the first network element performs, based on the request message, an operation corresponding to the request message, and sends a model request message to the second network element. The second network element returns the first AI model to the first network element, and the first network element returns the first AI model to the network device.

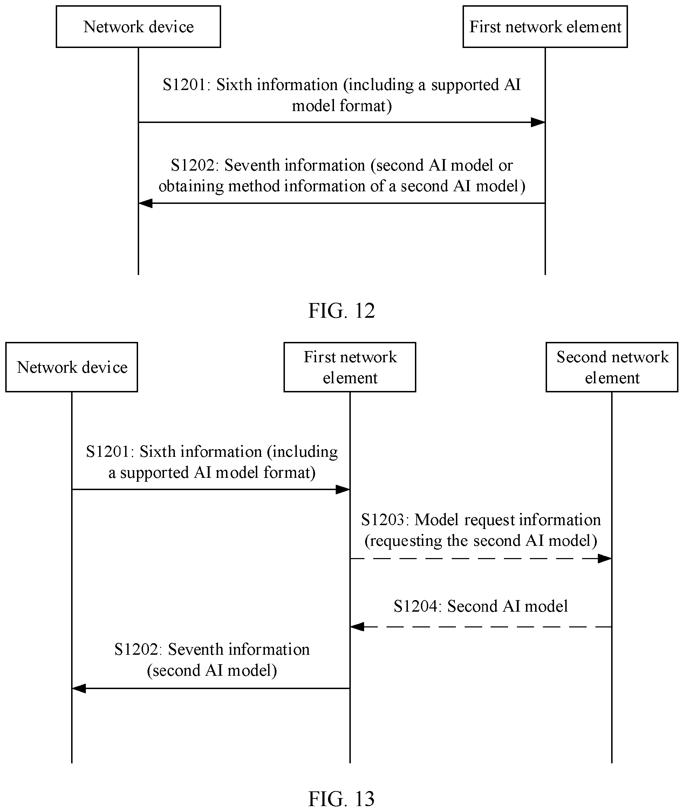

Based on a same technical concept, as shown in FIG. 12, an embodiment of this application further provides an AI model transmission method. The method relates to a network device, a terminal device, and a first device. The network device may be the network device 101 in FIG. 1, the terminal device may be the terminal device 102 in FIG. 1, and the first device may be the first device 103 in FIG. 1. In a possible design, the first device 103 may include a first network element and a second network element. For function descriptions of the first network element and the second network element, refer to the foregoing descriptions. The first network element may directly communicate with the network device. There may be a logical connection between the terminal device and the first network element, but the terminal device needs to communicate with the first network element through a third-party device. In a possible implementation solution, the third-party device may include, for example, one or more of a base station (a gNB), a user plane function (user plane function, UPF), or an application server. In another possible implementation solution, the third-party device may include, for example, a base station (a gNB) and/or an access and mobility management function (Access & Mobility Management Function, AMF).

A specific process of the AI model transmission method is described below.

S1201: The network device sends sixth information to the first network element, and correspondingly, the first network element receives the sixth information from the network device.

The sixth information includes an AI model format supported by the network device, and the AI model format supported by the network device includes a third AI model format. The sixth information may indicate a first communication scenario.

S1202: The first network element sends seventh information to the network device, and correspondingly, the network device receives the seventh information from the first network element.

The seventh information includes a second AI model, or the seventh information indicates an obtaining method information of a second AI model. The second AI model is represented in the third AI model format, and the third AI model format is determined based on the sixth information.

In the embodiment in FIG. 12, the network device reports the supported AI model format to the first network element, so that the first network element can learn of the AI model format supported by the network device. In this way, the first network element determines the third AI model format based on the AI model format supported by the network device, and the third AI model format is definitely the model format supported by the network device. The first network element indicates, to the network device, the obtaining method information (or referred to as download information) of the second AI model represented in the third AI model format, or the first network element sends the second AI model to the network device. In this way, a model format of the second AI model downloaded by the network device based on the obtaining method information is definitely supported by the network device, or the second AI model obtained by the network device is definitely supported by the network device. This ensures that the network device can understand or identify the AI model format, and ensures feasibility of executing a communication service by using the AI model.

With reference to the embodiment in FIG. 12, some optional implementations are provided below.

In a possible implementation, when the seventh information includes the second AI model, if the first network element stores the second AI model, the first network element returns the second AI model to the network device. Alternatively, the first network element may obtain the second AI model from the second network element.

When the first network element may obtain the second AI model from the second network element, as shown in FIG. 13, before S1202, the method may further include S1203 and S1204.

S1203: The first network element sends a model request message to the second network element, and the second network element receives the model request message from the first network element.

The model request message is used to request the second AI model.

S1204: The second network element sends the second AI model to the first network element, and correspondingly, the first network element receives the second AI model from the second network element.

In this case, the seventh information sent by the first network element to the network device may include the second AI model.

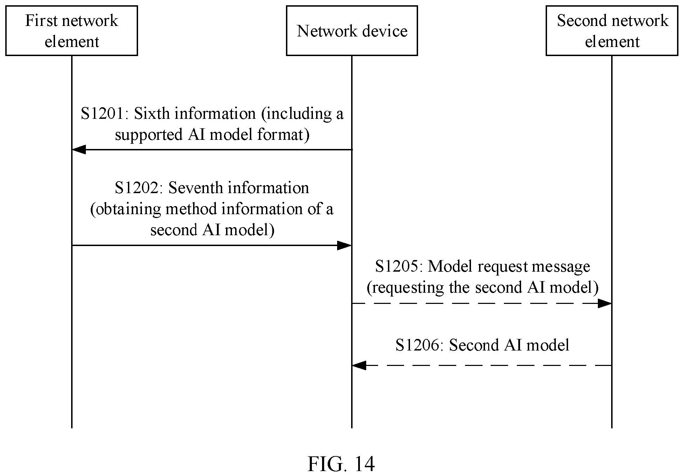

In a possible implementation, when the seventh information indicates the obtaining method information of the second AI model, as shown in FIG. 14, after S1202, the method may further include S1205 and S 1206. The obtaining method information of the second AI model may be an address of the second network element, a uniform resource locator (uniform resource locator, URL) of an AI model of the second network element, or a fully qualified domain name (fully qualified domain name, FQDN) of the second network element.

S1205: The network device sends a model request message to the second network element, and the second network element receives the model request message from the network device.

The model request message may be used to request the second AI model represented in the third AI model format. In this case, the second network element determines, based on the request message, the second AI model represented in the third AI model format. The model request information may carry an indication of the second AI model, and the indication of the second AI model indicates the second AI model that needs to be obtained by the network device. The second network element may store a plurality of AI models, and determine, based on the indication of the second AI model in the model request message, the second AI model represented in the third AI model format. The model request message may also carry the third AI model format. In this case, the second network element determines, based on the third AI model format, the second AI model represented in the third AI model format.

S 1206: The second network element sends the second AI model to the network device, and correspondingly, the network device receives the second AI model from the second network element.

In the embodiment in FIG. 12, the embodiment in FIG. 13, and the embodiment in FIG. 14, the second network element stores and maintains the AI models, so that the AI models are stored and maintained by using a small quantity of devices. This reduces maintenance costs and improves performance of a communication system.

Optionally, the network device may alternatively send a request message to the first network element, and the first network element performs, based on the request information, an operation corresponding to the request information. It may be understood that the request information may be included in the sixth information, and the request information and the sixth information are included in a same message, or the request information and the sixth information are included in different messages.

The request information may be used to request the first network element to determine whether the second AI model meets a hardware requirement of the network device. It may be understood that the request message is used to request the first network element to evaluate the second AI model. The first network element determines, based on the request information, whether the second AI model meets the hardware requirement of the network device. The first network element returns a determining result to the network device. The determining result may be separately sent, or may be included in the seventh information.

The request information is further used to request the first network element to compile the AI model format. In this case, the first network element compiles the third AI model format based on the request information, to obtain a low-layer representation AI model format. For example, the third AI model format is a high-layer representation AI model format, a model format output by a deep learning framework, or an intermediate representation IR layer model format. The compiled AI model format is the low-layer representation AI model format, for example, an AI model format represented by an executable file. A function of the first network element is to compile the high-layer representation AI model format into the low-layer representation AI model format. The first network element sends a compiled low-layer representation AI model to the network device. The compiled low-layer representation AI model may be separately sent, or may be included in the seventh information.

The sixth information may also be referred to as AI capability information of the network device. Parameters that may be included in the sixth information are described below by using examples.

The sixth information may include a third threshold. The third threshold is a maximum latency of a part executed by an AI model when the AI model is used by the network device to execute a communication service. For example, one communication service includes a plurality of parts. In this case, the network device uses the AI model to execute one or more of the plurality of parts in the communication service. For example, when the terminal device communicates with the network device, the network device may perform CSI decoding by using the AI model. In this communication scenario, the third threshold indicates a maximum latency corresponding to a case in which the network device performs CSI decoding by using the AI model. If a latency corresponding to a case in which the terminal device performs CSI decoding by using the second AI model exceeds the maximum latency indicated by the third threshold, it is considered that a latency requirement cannot be met when the second AI model is used to execute the communication service.

The sixth information may further include a fourth threshold. The fourth threshold is maximum power consumption of a part executed by an AI model when the AI model is used by the network device to execute a communication service. As described above, the communication service includes some services executed by the AI model, and the fourth threshold is maximum power consumption of the some services executed by the AI model.

The sixth information further includes indication information of an AI model compilation capability. The AI model compilation capability includes a capability of compiling and converting the AI model format.

The sixth information further includes a hardware capability of the network device. The hardware capability may be one or a combination of the following: a hardware model, a hardware version, a storage capability, a computing capability, a processor frequency, or a capability of supporting heterogeneous computing.

The first network element may determine the third AI model format based on the sixth information and the parameters carried in the sixth information. First, the second AI model represented in the third AI model format needs to meet the hardware requirement of the network device. When determining that the second AI model represented in the third AI model format meets the hardware requirement of the network device, the first network element sends the seventh information to the network device.

If the sixth information includes the third threshold, the first network element may determine whether the second AI model meets the hardware requirement of the network device. The hardware requirement is the latency requirement indicated by the third threshold. When the network device uses the second AI model to execute the communication service, if a latency generated through computing of the second AI model does not exceed the third threshold, it indicates that the second AI model meets the latency requirement indicated by the third threshold; or if a latency generated through computing of the second AI model exceeds the third threshold, it indicates that the second AI model does not meet the latency requirement indicated by the third threshold. If the network device has the capability of supporting heterogeneous computing, a plurality of computing units of heterogeneous computing may correspond to model files of a plurality of second AI models. One computing unit corresponds to a model file of one second AI model, or the plurality of computing units of heterogeneous computing correspond to a model file of one second AI model. In this application, heterogeneous computing may mean that a computing task of the AI model is divided into a plurality of subtasks, and computing of the plurality of subtasks is separately performed in appropriate running hardware. These computing usually may be performed in a parallel mode, but may alternatively be performed in a serial mode. In this way, a latency is determined based on a case in which all computing of the plurality of subtasks of the AI model is completed. In a case of heterogeneous computing, the first network element needs to determine whether a latency generated when the network device completes computing of the AI model on all computing units exceeds the third threshold. If the latency generated when the network device completes computing of the AI model on all computing units does not exceed the third threshold, it indicates that the second AI model meets the latency requirement indicated by the third threshold; or if the latency generated when the network device completes computing of the AI model on all computing units exceeds the third threshold, it indicates that the second AI model does not meet the latency requirement indicated by the third threshold.

If the sixth information includes the fourth threshold, the first network element may determine whether the second AI model meets the hardware requirement of the network device. The hardware requirement is a power consumption requirement indicated by the fourth threshold. When the network device uses the second AI model to execute the communication service, if power consumption generated through computing of the second AI model does not exceed the fourth threshold, it indicates that the second AI model meets the power consumption requirement indicated by the fourth threshold; or if power consumption generated through computing of the second AI model exceeds the fourth threshold, it indicates that the second AI model does not meet the power consumption requirement indicated by the fourth threshold. If the network device has the capability of supporting heterogeneous computing, the first network element needs to determine whether total power consumption generated when the network device executes the communication service separately on the plurality of computing units of heterogeneous computing exceeds the fourth threshold. When the total power consumption generated by using the plurality of computing units does not exceed the fourth threshold, it indicates that the second AI model meets the power consumption requirement indicated by the fourth threshold; or when the total power consumption generated by using the plurality of computing units exceeds the fourth threshold, it indicates that the second AI model does not meet the power consumption requirement indicated by the fourth threshold.

If the sixth information includes the storage capability of the network device, whether the second AI model meets the hardware requirement of the network device may be determined. The hardware requirement is a storage space requirement indicated by the storage capability. When storage space occupied by the second AI model is not greater than storage space indicated by the storage capability, it indicates that the second AI model meets the storage space requirement indicated by the storage capability; or when storage space occupied by the second AI model is greater than storage space indicated by the storage capability, it indicates that the second AI model does not meet the storage space requirement indicated by the storage capability.

When determining whether the second AI model meets the latency requirement indicated by the third threshold and/or the power consumption requirement indicated by the fourth threshold, the first network element may determine a computing capability (namely, computing power) of the network device based on the hardware capability indicated by the sixth information, and further determine whether the computing power of the network device can support running of the second AI model, that is, whether the latency requirement or the power consumption requirement is met when the second AI model is used based on the computing power of the network device.

A solution that needs to be protected in this application may be formed by combining the embodiment in FIG. 12 with the embodiment in FIG. 3. For example, based on S301 and S302, S1201 and S1202 may be further performed. A sequence of performing S301, S302, S1201, and S1202 is not limited in this application. The terminal device obtains a first AI model, and the network device obtains the second AI model. The terminal device uses the first AI model in the first communication scenario, and correspondingly, the network device uses the second AI model in the first communication scenario.

For example, the first communication scenario is CSI encoding and decoding. In this case, the terminal device performs CSI encoding by using the first AI model, and sends encoded data to the network device, and the network device restores a received data from the terminal device by using the second AI model. The first AI model may be referred to as an AI encoder, and the second AI model may be referred to as an AI decoder.

Optionally, the sixth information in S1201 may further include a first identifier. The first identifier indicates one or more communication scenarios, and the communication scenarios may be scenarios of performing communication by using AI. For example, the first identifier may indicate the first communication scenario, for example, may be CSI encoding and decoding or AI-based channel estimation. In the communication scenario of CSI encoding and decoding, both the network device and the terminal device need to use AI models, and need to use the AI models in pairs. The AI models used in pairs need to be obtained through joint training. For example, the first AI model and the second AI model are obtained through j oint training.

The scenarios of performing communication by using AI may be some communication scenarios in a wireless communication system. The wireless communication system includes some functional modules. An AI technology is introduced into the wireless communication system, which means that an AI technology-based module is used to replace a module in a conventional communication system. For example, in the communication scenario of CSI encoding and decoding, an AI-based CSI encoding module is used to replace a conventional CSI encoding module, and an AI-based CSI decoding module is used to replace a conventional CSI decoding module.

Corresponding to information indicating that the sixth information includes the first identifier, the second information sent by the network device to the terminal device in S302 may also include the first identifier. In this way, both the terminal device and the network device may use a corresponding AI technology in a communication scenario corresponding to the first identifier. The first identifier may include or indicate a group of AI models. The group of AI models includes one or more AI models, and the group of AI models are all used in the communication scenario (for example, the first communication scenario) indicated by the first identifier. The network device obtains the finally used second AI model from the first network element based on the first identifier and an AI capability of the network device. The terminal device obtains the finally used first AI model from the network device or the first device based on the first identifier and an AI capability of the terminal device.

In an application scenario, when the network device and the terminal device in a communication system are started, for example, when the terminal device just accesses a network, the terminal device communicates with the network device according to a conventional solution. After being started, the terminal device and the network device negotiate to use the AI technology by using a specific function module.

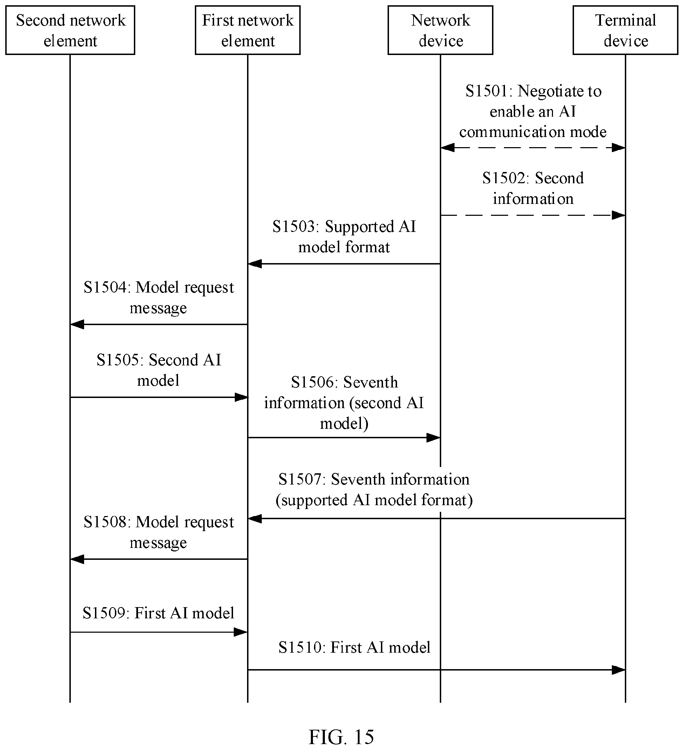

As shown in FIG. 15, with reference to a specific application scenario, the following describes a specific process of an AI model transmission method by using an example based on the embodiment in FIG. 12 and the embodiment in FIG. 3.

S1501: A network device and a terminal device negotiate to enable an AI communication mode.

The network device and the terminal device may negotiate, based on one or more communication scenarios, whether to enable the AI communication mode. In the one or more communication scenarios, an original communication mode may be used, or the AI communication mode may be used. The network device and the terminal device determine, through negotiation, to perform communication in the AI communication mode. In a negotiation process, the terminal device may indicate, to the network device, an AI model format supported by the terminal device, or may indicate, to the network device, a communication scenario in which the AI communication mode is used and that is supported by the terminal device. The network device sends first indication information to the terminal device based on an indication of the terminal device. The first indication information indicates to enable the AI communication mode in the one or more communication scenarios, the first indication information may include a first identifier, and the first identifier indicates the one or more communication scenarios.

S1502: The network device sends second information to the terminal device.

The second information indicates obtaining method information of a first AI model represented in a first AI model format, and the first AI model format is determined based on first information. The first information includes an AI model format supported by the terminal device, and the AI model format supported by the terminal device includes the first AI model format. Before S1502, the terminal device may send the first information to the network device, and correspondingly, the network device receives the first information from the terminal device.

The second information may further include the first identifier. The first identifier indicates the one or more communication scenarios, and the communication scenarios may be scenarios of performing communication by using AI. It may be understood that, when the second information includes the first identifier, the second information may replace a function of the first indication information in S1501, that is, indicating to enable the AI communication mode in the one or more communication scenarios.

S1503: The network device sends sixth information to a first network element.

The sixth information includes an AI model format supported by the network device, and the AI model format supported by the network device includes a third AI model format.

The sixth information may further include the first identifier. The first identifier indicates the one or more communication scenarios, and the communication scenarios may be the scenarios of performing communication by using AI.

S1504: The first network element sends a model request message to a second network element, and the second network element receives the model request message from the first network element.

The model request message is used to request a second AI model.

S1505: The second network element sends the second AI model to the first network element, and correspondingly, the first network element receives the second AI model from the second network element.

S1506: The first network element sends seventh information to the network device, and correspondingly, the network device receives the seventh information from the first network element.

The seventh information includes the second AI model, or the seventh information indicates obtaining method information of the second AI model. The second AI model is represented in the third AI model format, and the third AI model format is determined based on the sixth information.

S1507: The terminal device sends, to the first network element, information indicating the AI model format supported by the terminal device.

The terminal device may further send the first identifier to the first network element.

S1508: The first network element sends a model request message to the second network element, and the second network element receives the model request message from the first network element. The model request message is used to request the first AI model.

S1509: The second network element sends the first AI model to the first network element, and correspondingly, the first network element receives the first AI model from the second network element.

S1510: The first network element sends the first AI model to the terminal device, and correspondingly, the terminal device receives the first AI model from the first network element.

S1503 to S1506 are a process in which the network device obtains the second AI model, and S1507 to S1510 are a process in which the terminal device obtains the first AI model. A sequence of performing the two groups of steps is not limited, and the two groups of steps may be performed in parallel. After receiving the second information, the terminal device may perform S1507. A sequence of performing two groups of steps, namely, S1503 to S1506 and S1501 and S1502 is not limited, and the two groups of steps may be performed in parallel.

After the terminal device receives the first AI model, and the network device receives the second AI model, the terminal device communicates with the network device in the AI communication mode.

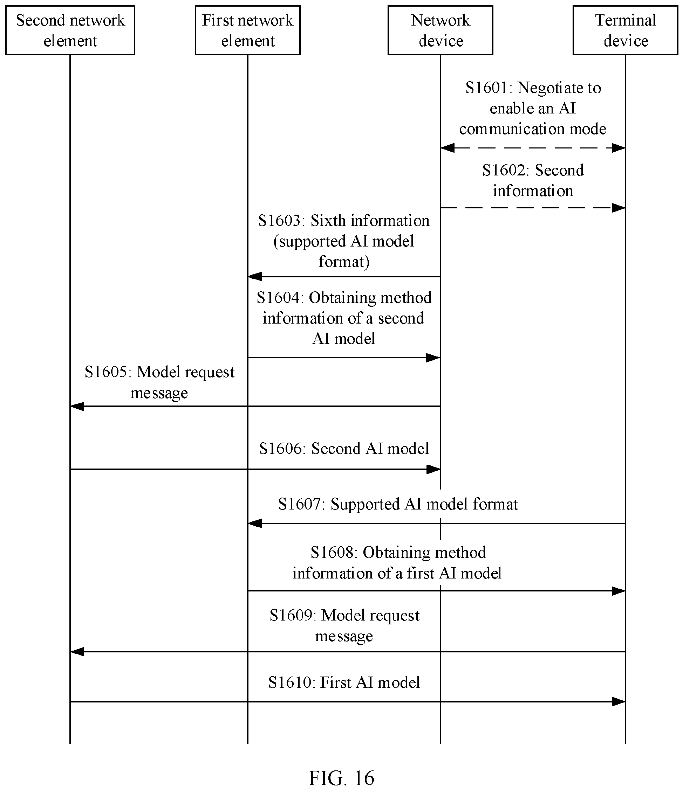

As shown in FIG. 16, with reference to a specific application scenario, the following describes a specific process of an AI model transmission method by using an example based on the embodiment in FIG. 12 and the embodiment in FIG. 3.

S1601: A network device and a terminal device negotiate to enable an AI communication mode.

This step is the same as S1501, and details are not repeated.

S1602: The network device sends second information to the terminal device.

The second information indicates obtaining method information of a first AI model represented in a first AI model format, and the first AI model format is determined based on first information. The first information includes an AI model format supported by the terminal device, and the AI model format supported by the terminal device includes the first AI model format. Before S1602, the terminal device may send the first information to the network device, and correspondingly, the network device receives the first information from the terminal device.

The second information may further include a first identifier. The first identifier indicates one or more communication scenarios, and the communication scenarios may be scenarios of performing communication by using AI.

This step is the same as S1502, and details are not repeated.

S1603: The network device sends sixth information to a first network element.

The sixth information includes an AI model format supported by the network device, and the AI model format supported by the network device includes a third AI model format.

The sixth information may further include the first identifier. The first identifier indicates the one or more communication scenarios, and the communication scenarios may be the scenarios of performing communication by using AI.

S1604: The first network element sends obtaining method information of a second AI model to the network device.

The second AI model is represented in the third AI model format, and the third AI model format is determined based on the sixth information.

S1605: The network device sends model a model request message to a second network element based on the obtaining method information of the second AI model, where the model request information is used to request the second AI model.

S1606: The second network element sends the second AI model to the network device, and correspondingly, the network device receives the second AI model from the second network element.

S1607: The terminal device sends, to the first network element based on the second information, information indicating the AI model format supported by the terminal device.

The second information may include an address of the first network element. The terminal device may further send the first identifier to the first network element.

S1608: The first network element sends obtaining method information of the first AI model to the terminal device, where the obtaining method information of the first AI model may include an address of the second network element.

S1609: The terminal device sends a model request message to the second network element based on the obtaining method information of the first AI model in S 1608, and the second network element receives the model request message from the terminal device. The model request message is used to request the first AI model.

S1610: The second network element sends the first AI model to the terminal device, and correspondingly, the terminal device receives the first AI model from the second network element.

S 1603 to S 1606 are a process in which the network device obtains the second AI model, and S 1607 to S1610 are a process in which the terminal device obtains the first AI model. A sequence of performing the two groups of steps is not limited, and the two groups of steps may be performed in parallel. After receiving the second information, the terminal device may perform S 1607. A sequence of performing two groups of steps, namely, S 1603 to S 1606 and S 1601 and S 1602 is not limited, and the two groups of steps may be performed in parallel.

After the terminal device receives the first AI model, and the network device receives the second AI model, the terminal device communicates with the network device in the AI communication mode.

S1503 to S1506 and S1603 to S1606 are two manners of obtaining the second AI model by the network device, and either of the manners may be selected for implementation. S 1507 to S1510 and S 1607 to S 1610 are two manners of obtaining the first AI model by the terminal device, and either of the manners may be selected for implementation.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, first device, or data center to another website, computer, first device, or data center in a wired or wireless manner. The computer-readable storage medium may be any usable medium that can be accessed by a computer, or a data storage device, like a first device or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects. In embodiments provided in this application, steps represented by dashed lines are optional steps.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined according to functions and internal logic of the processes.

With reference to the descriptions of the foregoing embodiments, this application further provides the following embodiments.

According to a first aspect, the following Embodiment 1 to Embodiment 7 are included.

Embodiment 1. An artificial intelligence AI model transmission method, including:
A terminal device sends first information to a network device, where the first information includes an AI model format supported by the terminal device, and the AI model format supported by the terminal device includes a first AI model format; and
the terminal device receives, from the network device, a first AI model represented in the first AI model format, where the first AI model format is determined based on the first information. The terminal device reports the supported AI model format to the network device, so that the network device can learn of a software capability of the terminal device, in other words, learn of the AI model format supported by the terminal device. In this way, the network device determines the first AI model format based on the AI model format supported by the terminal device, and the first AI model format is definitely the model format supported by the terminal device. The network device indicates, to the terminal device, the first AI model represented in the first AI model format. In this way, a model format of the first AI model is definitely supported by the terminal device. This ensures that the terminal device and the network device reach an agreement on a model format of an AI model for a wireless communication service, and the terminal device can understand or identify the AI model format, so that feasibility of executing the communication service by using the AI model is ensured.

Embodiment 2. The method according to Embodiment 1, where the AI model format includes one or more of the following:
a model format output by a deep learning framework, an intermediate representation layer model format, or a model format represented by an executable file that can be run on hardware.

Embodiment 3. The method according to Embodiment 1 or 2, where the first information further includes a first threshold and/or a second threshold, the first threshold is a maximum latency of a part executed by an AI model when the AI model is used by the terminal device to execute a communication service, and the second threshold is maximum power consumption of a part executed by an AI model when the AI model is used by the terminal device to execute a communication service. The terminal device reports the first threshold, so that the network device can determine, based on the first threshold, whether the first AI model meets a latency requirement. In this way, the first AI model can better meet a communication latency requirement, and an AI technology is better applied to the communication service. The terminal device reports the second threshold, so that the network device can determine, based on the second threshold, whether the first AI model meets a power consumption requirement. In this way, the first AI model can better adapt to the power consumption requirement of the terminal device.

Embodiment 4. The method according to any one of Embodiments 1 to 3, where the first information further includes an AI model compilation capability, and the AI model compilation capability includes a capability of compiling and converting the AI model format. In this way, the first AI model format determined based on the AI model compilation capability may be a high-layer representation of an AI model, or may be a low-layer representation of an AI model, and a more appropriate AI model format may be selected based on a requirement of the network device, so that a selection range is wider.

Embodiment 5. The method according to any one of Embodiments 1 to 4, where the first information further includes one or more of the following: a hardware model, a hardware version, a storage capability, a computing capability, or a capability of supporting heterogeneous computing. In this way, an AI model that better matches a hardware capability of the terminal device can be obtained based on various parameters of the first information, so that the AI technology is better applied to the communication service.

Embodiment 6. The method according to any one of Embodiments 1 to 5, where the method further includes:
The terminal device receives working mode configuration information from the network device, where the working mode configuration information is used to configure a working mode in which the terminal device executes the communication service, the working mode is an AI mode, and the AI mode indicates that the terminal device uses the first AI model to execute the communication service. The working mode configuration information can indicate that the terminal device uses the AI technology to execute the communication service, so that working modes of the terminal device and the network device can be consistent.

Embodiment 7. The method according to Embodiment 6, where the working mode configuration information further includes effective time of the first AI model. The effective time of the first AI model is configured, so that another working mode can be switched to execute the communication service, and the working mode in which the communication service is executed can be more flexibly configured.

According to a second aspect, the following Embodiment 8 to Embodiment 20 are included. For beneficial effects of the second aspect, refer to corresponding descriptions in the first aspect.

Embodiment 8. An artificial intelligence AI model transmission method, including:
A network device receives first information from a terminal device, where the first information includes an AI model format supported by the terminal device; and
the network device sends, to the terminal device, a first AI model represented in a first AI model format, where the first AI model format is determined based on the first information.

Embodiment 9. The method according to Embodiment 8, where the AI model format includes one or more of the following:
a model format output by a deep learning framework, an intermediate representation IR layer model format, or a model format represented by an executable file that can be run on hardware.

Embodiment 10. The method according to Embodiment 8 or 9, where the first information further includes a first threshold and/or a second threshold, the first threshold is a maximum latency of a part executed by an AI model when the AI model is used by the terminal device to execute a communication service, and the second threshold is maximum power consumption of a part executed by an AI model when the AI model is used by the terminal device to execute a communication service.

Embodiment 11. The method according to Embodiment 10, where the first AI model meets a hardware requirement of the terminal device, and the hardware requirement includes a latency requirement indicated by the first threshold, and/or a power consumption requirement indicated by the second threshold.

Embodiment 12. The method according to any one of Embodiments 8 to 11, where the first information further includes one or more of the following: a hardware model, a hardware version, a storage capability, a computing capability, or a capability of supporting heterogeneous computing.

Embodiment 13. The method according to Embodiment 12, where the first AI model meets the hardware requirement of the terminal device, and the hardware requirement includes a storage space requirement indicated by the storage capability.

Embodiment 14. The method according to Embodiment 11, where the method further includes: The network device sends a request message to a first device, where the request message is used to request the first device to determine whether the first AI model meets the hardware requirement of the terminal device, and the request message includes the AI model format supported by the terminal device, the first threshold, and/or the second threshold; or the request message is used to request the first AI model format. The request message is sent to the first device, so that the first device determines whether the first AI model meets the hardware requirement of the terminal device. In this way, a determining result is more accurate. The first AI model format is requested, so that the first device compiles and converts the first AI model format, to obtain a low-layer representation AI model. In this way, the first AI model format matches a capability of the terminal device more accurately, and AI model leakage does not occur.

Embodiment 15. The method according to Embodiment 13, where the method further includes: The network device sends a request message to a first device, where the request message is used to request the first device to determine whether the first AI model meets the hardware requirement of the terminal device, and the request message includes one or more of the following: the AI model format supported by the terminal device, the hardware model, the hardware version, the storage capability, the computing capability, or the capability of supporting heterogeneous computing; or the request message is used to request the first AI model format. The request message is sent to the first device, so that the first device determines whether the first AI model meets the hardware requirement of the terminal device. In this way, a determining result is more accurate. The first AI model format is requested, so that the first device compiles and converts the first AI model format, to obtain a low-layer representation AI model. In this way, the first AI model format matches a capability of the terminal device more accurately, and AI model leakage does not occur.

Embodiment 16. The method according to any one of Embodiments 8 to 15, where the first information further includes an AI model compilation capability, and the AI model compilation capability includes a capability of compiling and converting the AI model format.

Embodiment 17. The method according to Embodiment 16, where the method further includes: The network device determines, based on the first information, that the first AI model format is the model format output by the deep learning framework or the intermediate representation IR layer model format.

When the terminal device has a compilation capability, a high-layer representation AI model is indicated. Because the high-layer representation AI model is unrelated to hardware of the terminal device, the high-layer representation AI model is easier to understand. In this case, the terminal device needs to report only the AI model compilation capability, and does not need to report other hardware information (for example, the hardware model or the hardware version). This protects privacy of the terminal device and enables the solution to be more applicable to devices of various vendors.

Embodiment 18. The method according to any one of Embodiments 8 to 15, where the method further includes:
When the terminal device does not support an AI model compilation capability, the network device determines that the first AI model format is the model format represented by the executable file. In this way, the first AI model format matches the capability of the terminal device more accurately.

Embodiment 19. The method according to any one of Embodiments 8 to 18, where the method further includes:
The network device sends working mode configuration information to the terminal device, where the working mode configuration information is used to configure a working mode in which the terminal device executes the communication service, the working mode is an AI mode, and the AI mode indicates that the terminal device uses the first AI model to execute the communication service.

Embodiment 20. The method according to Embodiment 19, where the working mode configuration information further includes effective time of the first AI model.

According to a third aspect, the following Embodiment 21 to Embodiment 27 are included. For beneficial effects of the third aspect, refer to descriptions in corresponding embodiments of the first aspect or the second aspect.

Embodiment 21. An artificial intelligence AI model transmission method, including:
A first device receives a request message from a terminal device; and
the first device determines, based on the request message, whether a first AI model meets a hardware requirement of a terminal device, where a model format of the first AI model is a first AI model format; or the first device compiles and converts a second AI model format into a first AI model format based on the request message. The first device may store and maintain the AI model, and a quantity of first devices may be less than a quantity of network devices. This reduces maintenance costs, reduces overheads and power consumption of the network device, and improves performance of a communication system.

Embodiment 22. The method according to Embodiment 21, where the second AI model format is a model format output by a deep learning framework or an intermediate representation IR layer model format, and the first AI model format is a model format represented by an executable file.

Embodiment 23. The method according to Embodiment 21 or 22, where the request message carries a first threshold, and the first threshold is a maximum latency of a part executed by an AI model when the AI model is used by the terminal device to execute a communication service.

Embodiment 24. The method according to Embodiment 23, where the determining whether a first AI model meets a hardware requirement of the terminal device includes:
when a latency of a part executed by the first AI model when the first AI model is used to execute a communication service does not exceed the first threshold, determining that the first AI model meets a latency requirement of the terminal device; and/or when a latency of a part executed by the first AI model when the first AI model is used to execute a communication service exceeds the first threshold, determining that the first AI model does not meet a latency requirement of the terminal device.

Embodiment 25. The method according to any one of Embodiments 21 to 24, where the request message carries a second threshold, and the second threshold is maximum power consumption of a part executed by an AI model when the AI model is used by the terminal device to execute a communication service.

Embodiment 26. The method according to Embodiment 25, where the determining whether a first AI model meets a hardware requirement of the terminal device includes:
when power consumption of a part executed by the first AI model when the first AI model is used to execute a communication service does not exceed the second threshold, determining that the first AI model meets a power consumption requirement of the terminal device; and/or when power consumption of a part executed by the first AI model when the first AI model is used to execute a communication service exceeds the second threshold, determining that the first AI model does not meet a power consumption requirement of the terminal device.

Embodiment 27. The method according to any one of Embodiments 21 to 26, where the determining whether a first AI model meets a hardware requirement of the terminal device includes:
when storage space occupied by the first AI model does not exceed storage space indicated by a storage capability of the terminal device, determining that the first AI model meets a storage space requirement of the terminal device; and/or when storage space occupied by the first AI model exceeds storage space indicated by a storage capability of the terminal device, determining that the first AI model does not meet a storage space requirement of the terminal device.

According to a fourth aspect, the following Embodiment 28 to Embodiment 36 are included. For beneficial effects of the fourth aspect, refer to descriptions in corresponding embodiments of the first aspect.

Embodiment 28. An artificial intelligence AI model transmission method, including:
A terminal device sends first information to a network device, where the first information includes an AI model format supported by the terminal device, and the AI model format supported by the terminal device includes a first AI model format; and
the terminal device receives, from the network device, a first AI model represented in the first AI model format, where the first AI model format is determined based on the first information.

Embodiment 29. The method according to Embodiment 28, where the AI model format includes one or more of the following:
a model format output by a deep learning framework, an intermediate representation layer model format, or a model format represented by an executable file that can be run on hardware.

Embodiment 30. The method according to Embodiment 28 or 29, where the method further includes:
The terminal device determines whether the first AI model meets a hardware requirement of the terminal device. The terminal device determines whether the first AI model meets the hardware requirement of the terminal device, which is closer to an actual running hardware environment, so that a determining result is more accurate.

Embodiment 31. The method according to Embodiment 30, where that the terminal device determines whether the first AI model meets a hardware requirement of the terminal device includes:
when a latency of a part executed by the first AI model when the first AI model is used to execute a communication service does not exceed a first threshold, determining that the first AI model meets a latency requirement of the terminal device; and/or when a latency of a part executed by the first AI model when the first AI model is used to execute a communication service exceeds a first threshold, determining that the first AI model does not meet a latency requirement of the terminal device, where
the first threshold is a maximum latency of a part executed by an AI model when the AI model is used by the terminal device to execute a communication service.

Embodiment 32. The method according to Embodiment 30 or 31, where that the terminal device determines whether the first AI model meets a hardware requirement of the terminal device includes:
when power consumption of a part executed by the first AI model when the first AI model is used to execute a communication service does not exceed a second threshold, determining that the first AI model meets a power consumption requirement of the terminal device; and/or when power consumption of a part executed by the first AI model when the first AI model is used to execute a communication service exceeds a second threshold, determining that the first AI model does not meet a power consumption requirement of the terminal device, where
the second threshold is maximum power consumption of a part executed by an AI model when the AI model is used by the terminal device to execute a communication service.

Embodiment 33. The method according to any one of Embodiments 30 to 32, where that the terminal device determines whether the first AI model meets a hardware requirement of the terminal device includes:
when storage space occupied by the first AI model does not exceed storage space indicated by a storage capability of the terminal device, determining that the first AI model meets a storage space requirement of the terminal device; and/or when storage space occupied by the first AI model exceeds storage space indicated by a storage capability of the terminal device, determining that the first AI model does not meet a storage space requirement of the terminal device.

Embodiment 34. The method according to any one of Embodiments 28 to 33, where the method further includes:
The terminal device compiles and converts the first AI model format into a second AI model format.

Embodiment 35. The method according to Embodiment 34, where the first AI model format is the model format output by the deep learning framework or the intermediate representation IR layer model format, and the second AI model format is the model format represented by the executable file. A high-layer representation AI model is compiled into a low-layer representation AI model, and the low-layer representation AI model is an AI model related to running hardware. The low-layer representation AI model is used for evaluation, so that an evaluation result is more accurate.

Embodiment 36. The method according to any one of Embodiments 28 to 35, where the method further includes:
When the first AI model does not meet the hardware requirement of the terminal device, the terminal device sends a mode request message to the network device, where the mode request message is used to request to execute the communication service in a legacy communication mode.

According to a fifth aspect, the following Embodiment 37 to Embodiment 48 are included. For beneficial effects of the fifth aspect, refer to descriptions in corresponding embodiments of the second aspect.

Embodiment 37. An artificial intelligence AI model transmission method, including:
A network device receives first information from a terminal device, where the first information includes an AI model format supported by the terminal device; and
the network device sends, to the terminal device, a first AI model represented in a first AI model format, where the first AI model format is determined based on the first information.

Embodiment 38. The method according to Embodiment 37, where the AI model format includes one or more of the following:
a model format output by a deep learning framework, an intermediate representation layer model format, or a model format represented by an executable file that can be run on hardware.

Embodiment 39. The method according to Embodiment 37 or 38, where the first information further includes a first threshold and/or a second threshold, the first threshold is a maximum latency of a part executed by an AI model when the AI model is used by the terminal device to execute a communication service, and the second threshold is maximum power consumption of a part executed by an AI model when the AI model is used by the terminal device to execute a communication service.

Embodiment 40. The method according to Embodiment 39, where the first AI model meets a hardware requirement of the terminal device, and the hardware requirement includes a latency requirement indicated by the first threshold, and/or a power consumption requirement indicated by the second threshold.

Embodiment 41. The method according to any one of Embodiments 37 to 40, where the first information further includes one or more of the following: a hardware model, a hardware version, a storage capability, a computing capability, or a capability of supporting heterogeneous computing.

Embodiment 42. The method according to Embodiment 41, where the first AI model meets the hardware requirement of the terminal device, and the hardware requirement includes a storage space requirement indicated by the storage capability.

Embodiment 43. The method according to any one of Embodiments 37 to 42, where the first information further includes an AI model compilation capability, and the AI model compilation capability includes a capability of compiling and converting the AI model format.

Embodiment 44. The method according to Embodiment 43, where the method further includes: The network device determines, based on the first information, that the first AI model format is the model format output by the deep learning framework or the intermediate representation IR layer model format.

Embodiment 45. The method according to any one of Embodiments 37 to 42, where the method further includes:
When the terminal device does not support an AI model compilation capability, the network device determines that the first AI model format is the model format represented by the executable file.

Embodiment 46. The method according to any one of Embodiments 37 to 45, where the method further includes:
The network device sends working mode configuration information to the terminal device, where the working mode configuration information is used to configure a working mode in which the terminal device executes the communication service, the working mode is an Al mode, and the AI mode indicates that the terminal device uses the first AI model to execute the communication service.

Embodiment 47. The method according to Embodiment 46, where the working mode configuration information further includes effective time of the first AI model.

Embodiment 48. The method according to any one of Embodiments 37 to 47, where the method further includes:
The network device receives a mode request message from the terminal device, where the mode request message is used to request to execute the communication service in a legacy communication mode; and
the network device sends a mode acknowledgment message to the terminal device, where the mode acknowledgment message indicates acknowledgement of executing the communication service in the legacy communication mode.

According to a sixth aspect, the following Embodiment 49 to Embodiment 54 are included.

Embodiment 49 provides an artificial intelligence AI model transmission method. The method may be performed by a terminal device, or may be performed by a component of a terminal device. The method may be implemented by using the following steps.

The terminal device sends first information to a network device, where the first information includes an AI model format supported by the terminal device, and the AI model format supported by the terminal device includes a first AI model format; and the terminal device receives working mode configuration information from the network device, where the working mode configuration information is used to configure a working mode in which the terminal device executes a communication service, the working mode includes an AI mode or a non-AI mode, the AI mode indicates that the communication service is executed by using the first AI model, and the non-AI mode indicates that the communication service is executed in a legacy communication mode. The working mode configuration information can indicate that the terminal device uses the AI technology to execute the communication service, so that working modes of the terminal device and the network device can be consistent.

Embodiment 50. The method according to Embodiment 49, where the AI model format includes one or more of the following: a model format output by a deep learning framework, an intermediate representation layer model format, or a model format represented by an executable file that can be run on hardware.

Embodiment 51. The method according to Embodiment 49 or 50, where the first information further includes a first threshold and/or a second threshold, the first threshold is a maximum latency of a part executed by an AI model when the AI model is used by the terminal device to execute a communication service, and the second threshold is maximum power consumption of a part executed by an AI model when the AI model is used by the terminal device to execute a communication service.

Embodiment 52. The method according to any one of Embodiments 49 to 51, where the first information further includes an AI model compilation capability, and the AI model compilation capability includes a capability of compiling and converting the AI model format.

Embodiment 53. The method according to any one of Embodiments 49 to 52, where the first information further includes one or more of the following: a hardware model, a hardware version, a storage capability, a computing capability, or a capability of supporting heterogeneous computing.

Embodiment 54. The method according to any one of Embodiments 49 to 53, where when the working mode configuration information is used to configure, to be the AI mode, the working mode in which the terminal device executes the communication service, the working mode configuration information further includes effective time of the first AI model.

According to a seventh aspect, Embodiment 55 provides an artificial intelligence AI model transmission method. The method may be performed by a network device, or may be performed by a component of a network device. The method may be implemented by using the following steps.

The network device receives first information from a terminal device, where the first information includes an AI model format supported by the terminal device, and the AI model format supported by the terminal device includes a first AI model format; and the network device sends working mode configuration information to the terminal device, where the working mode configuration information is used to configure a working mode in which the terminal device executes a communication service, the working mode includes an AI mode or a non-AI mode, the AI mode indicates that the communication service is executed by using the first AI model, and the non-AI mode indicates that the communication service is executed in a legacy communication mode.

The seventh aspect may further include the solutions in the foregoing Embodiments 50 to 54.

According to an eighth aspect, an embodiment 56 provides an artificial intelligence AI model transmission method. The method may be performed by a network device, or may be performed by a component of a network device. The method may be implemented by using the following steps.

The network device sends sixth information to a first network element, where the sixth information includes an AI model format supported by the network device, the AI model format supported by the network device includes a third AI model format, and/or the sixth information indicates a first communication scenario; and
the network device receives seventh information from the first network element, where the seventh information indicates obtaining method information of a second AI model represented in the third AI model format, or the seventh information includes a second AI model represented in the third AI model format, and the third AI model format is determined based on the sixth information.

Embodiment 57. The method according to Embodiment 56, where the method further includes:
The network device sends a first request message to a second network element based on the obtaining method information, where the first request message is used to request the second AI model; and
the network device receives the second AI model from the second network element.

Embodiment 58. The method according to Embodiment 56 or 57, where the sixth information further includes a third threshold and/or a fourth threshold, the third threshold is a maximum latency of a part executed by an AI model when the AI model is used by the network device to execute a communication service, and the fourth threshold is maximum power consumption of a part executed by an AI model when the AI model is used by the network device to execute a communication service.

Embodiment 59. The method according to any one of Embodiments 55 to 58, where the sixth information further includes one or more pieces of the following information of the network device: a hardware model, a hardware version, a storage capability, a computing capability, a capability of supporting heterogeneous computing, or an AI model compilation capability, and the AI model compilation capability includes a capability of compiling and converting the AI model format.

Embodiment 60. The method according to any one of Embodiments 55 to 59, where the AI model format includes one or more of the following:
a model format output by a deep learning framework, an intermediate representation layer model format, or a model format represented by an executable file.

Embodiment 61. The method according to any one of Embodiments 55 to 60, where the method further includes:
The network device sends first indication information to the terminal device, where the first indication information indicates to enable an AI communication mode in one or more communication scenarios, and the one or more communication scenarios include the first communication scenario.

According to an eighth aspect, an embodiment 62 provides an artificial intelligence AI model transmission method. The method may be performed by a network element, or may be performed by a component of a network element, and the network element may be denoted as a first network element. The method may be implemented by using the following steps: The first network element receives sixth information from a network device, where the sixth information includes an AI model format supported by the network device, the AI model format supported by the network device includes a third AI model format, and/or the sixth information indicates a first communication scenario; and
the first network element sends seventh information to the network device, where the seventh information indicates obtaining method information of a second AI model represented in the third AI model format, or the seventh information includes a second AI model represented in the third AI model format, and the third AI model format is determined based on the sixth information.

Embodiment 63. The method according to Embodiment 62, where the method further includes:
The first network element sends a request message to a second network element, where the request message is used to request the second AI model; and
the first network element receives the second AI model from the second network element.

Embodiment 64. The method according to Embodiment 62 or 63, where the sixth information further includes a third threshold and/or a fourth threshold, the third threshold is a maximum latency of a part executed by an AI model when the AI model is used by the network device to execute a communication service, and the fourth threshold is maximum power consumption of a part executed by an AI model when the AI model is used by the network device to execute a communication service.

Embodiment 65. The method according to any one of Embodiments 62 to 64, where the sixth information further includes one or more pieces of the following information of the network device: a hardware model, a hardware version, a storage capability, a computing capability, a capability of supporting heterogeneous computing, or an AI model compilation capability, and the AI model compilation capability includes a capability of compiling and converting the AI model format.

Embodiment 66. The method according to any one of Embodiments 62 to 65, where the AI model format includes one or more of the following:
a model format output by a deep learning framework, an intermediate representation layer model format, or a model format represented by an executable file.

## Claims

1. An artificial intelligence AI model transmission method, comprising:
sending, by a terminal device, first information to a network device, wherein the first information comprises an AI model format supported by the terminal device, and the AI model format supported by the terminal device comprises a first AI model format; and
receiving, by the terminal device, second information from the network device, wherein the second information indicates obtaining method information of a first AI model, the first AI model is represented in the first AI model format, the first AI model format is determined based on the first information, and/or the first AI model is applied to a first communication scenario.

2. The method according to claim 1, wherein the method further comprises:
obtaining, by the terminal device, the first AI model based on the obtaining method information.

3. The method according to claim 2, wherein the obtaining, by the terminal device, the first AI model based on the obtaining method information comprises:
sending, by the terminal device, a request message to a first device, wherein the request message is used to request the first AI model represented in the first AI model format, and/or the request message indicates the first communication scenario; and
receiving, by the terminal device, fourth information from the first device, wherein the fourth information comprises the first AI model represented in the first AI model format.

4. The method according to claim 3, wherein the request message is further used to request the first device to determine whether the first AI model meets a hardware requirement of the terminal device, and the fourth information further comprises a result of determining whether the first AI model meets the hardware requirement of the terminal device.

5. The method according to claim 4, wherein the request message comprises one or more of the following: a first threshold, a second threshold, a hardware model, a hardware version, a storage capability, a computing capability, or a capability of supporting heterogeneous computing, the first threshold is a maximum latency of a part executed by an AI model when the AI model is used by the terminal device to execute a communication service, and the second threshold is maximum power consumption of a part executed by an AI model when the AI model is used by the terminal device to execute a communication service.

6. The method according to any one of claims 1 to 5, wherein the method further comprises:
sending, by the terminal device, third information to the network device, wherein the third information indicates whether the terminal device uses the first AI model to execute the communication service.

7. The method according to any one of claims 1 to 6, wherein the AI model format comprises one or more of the following:
a model format output by a deep learning framework, an intermediate representation layer model format, or a model format represented by an executable file.

8. The method according to any one of claims 1 to 7, wherein the first information further comprises the first threshold and/or the second threshold, the first threshold is a maximum latency of a part executed by an AI model when the AI model is used by the terminal device to execute a communication service, and the second threshold is maximum power consumption of a part executed by an AI model when the AI model is used by the terminal device to execute a communication service.

9. The method according to any one of claims 1 to 8, wherein the first information further comprises one or more of the following: the hardware model, the hardware version, the storage capability, the computing capability, the capability of supporting heterogeneous computing, or an AI model compilation capability, and the AI model compilation capability comprises a capability of compiling and converting the AI model format.

10. The method according to any one of claims 1 to 9, wherein the method further comprises:
receiving, by the terminal device, working mode configuration information from the network device, wherein the working mode configuration information is used to configure a working mode in which the terminal device executes the communication service, the working mode is an AI mode, and the AI mode indicates that the terminal device uses the first AI model to execute the communication service.

11. The method according to claim 10, wherein the working mode configuration information further comprises effective time of the first AI model.

12. An artificial intelligence AI model transmission method, comprising:
receiving, by a network device, first information from a terminal device, wherein the first information comprises an AI model format supported by the terminal device, and the AI model format supported by the terminal device comprises a first AI model format; and
sending, by the network device, second information to the terminal device, wherein the second information indicates obtaining method information of a first AI model, the first AI model is represented in the first AI model format, the first AI model format is determined based on the first information, and/or the first AI model is applied to a first communication scenario.

13. The method according to claim 12, wherein the obtaining method information comprises a download address of the first AI model.

14. The method according to claim 12 or 13, wherein the method further comprises:
receiving, by the network device, third information from the terminal device, wherein the third information indicates whether the terminal device uses the first AI model to execute a communication service.

15. The method according to any one of claims 12 to 14, wherein the AI model format comprises one or more of the following:
a model format output by a deep learning framework, an intermediate representation layer model format, or a model format represented by an executable file.

16. The method according to any one of claims 12 to 15, wherein the first information further comprises a first threshold and/or a second threshold, the first threshold is a maximum latency of a part executed by an AI model when the AI model is used by the terminal device to execute a communication service, and the second threshold is maximum power consumption of a part executed by an AI model when the AI model is used by the terminal device to execute a communication service.

17. The method according to claim 16, wherein the first AI model meets a first hardware requirement of the terminal device, and the first hardware requirement comprises a latency requirement indicated by the first threshold, and/or a power consumption requirement indicated by the second threshold.

18. The method according to any one of claims 12 to 17, wherein the first information further comprises one or more of the following: a hardware model, a hardware version, a storage capability, a computing capability, or a capability of supporting heterogeneous computing.

19. The method according to claim 18, wherein the first AI model meets a second hardware requirement of the terminal device, and the second hardware requirement comprises a storage space requirement indicated by the storage capability.

20. The method according to any one of claims 12 to 19, wherein the first information further comprises an AI model compilation capability, and the AI model compilation capability comprises a capability of compiling and converting the AI model format.

21. The method according to claim 20, wherein the method further comprises: determining, by the network device based on the first information, that the first AI model format is the model format output by the deep learning framework or the intermediate representation layer model format.

22. The method according to any one of claims 12 to 19, wherein the method further comprises:
when the terminal device does not support an AI model compilation capability, determining, by the network device, that the first AI model format is the model format represented by the executable file.

23. The method according to any one of claims 12 to 22, wherein the method further comprises:
sending, by the network device, working mode configuration information to the terminal device, wherein the working mode configuration information is used to configure a working mode in which the terminal device executes the communication service, the working mode is an AI mode, and the AI mode indicates that the terminal device uses the first AI model to execute the communication service.

24. The method according to claim 23, wherein the working mode configuration information further comprises effective time of the first AI model.

25. An artificial intelligence AI model transmission method, comprising:
receiving, by a first device, a request message from a terminal device;
determining, by the first device based on the request message, whether a first AI model meets a hardware requirement of the terminal device; and/or determining, by the first device based on the request message, a first AI model represented in a first AI model format; and/or determining, by the first device based on the request message, a first AI model when the first AI model is used by the terminal device in a first communication scenario, wherein the request message indicates the first communication scenario; and
sending, by the first device, fourth information to the terminal device, wherein the fourth information comprises one or more of the following: a result of determining whether the first AI model meets the hardware requirement of the terminal device, the first AI model represented in the first AI model format, or the first AI model when the first AI model is used by the terminal device in the first communication scenario.

26. The method according to claim 25, wherein the first AI model format comprises one or more of the following: a model format output by a deep learning framework, an intermediate representation layer model format, or a model format represented by an executable file.

27. The method according to claim 25 or 26, wherein the request message carries a first threshold, and the first threshold is a maximum latency of a part executed by an AI model when the AI model is used by the terminal device to execute a communication service.

28. The method according to claim 27, wherein the determining whether a first AI model meets a hardware requirement of the terminal device comprises:
when a latency of a part executed by the first AI model when the first AI model is used to execute a communication service does not exceed the first threshold, determining that the first AI model meets a latency requirement of the terminal device; and/or when a latency of a part executed by the first AI model when the first AI model is used to execute a communication service exceeds the first threshold, determining that the first AI model does not meet a latency requirement of the terminal device.

29. The method according to any one of claims 25 to 28, wherein the request message carries a second threshold, and the second threshold is maximum power consumption of a part executed by an AI model when the AI model is used by the terminal device to execute a communication service.

30. The method according to claim 29, wherein the determining whether a first AI model meets a hardware requirement of the terminal device comprises:
when power consumption of a part executed by the first AI model when the first AI model is used to execute a communication service does not exceed the second threshold, determining that the first AI model meets a power consumption requirement of the terminal device; and/or when power consumption of a part executed by the first AI model when the first AI model is used to execute a communication service exceeds the second threshold, determining that the first AI model does not meet a power consumption requirement of the terminal device.

31. The method according to any one of claims 25 to 30, wherein the request message further comprises one or more of the following: a hardware model, a hardware version, a storage capability, a computing capability, or a capability of supporting heterogeneous computing.

32. The method according to claim 31, wherein the determining whether a first AI model meets a hardware requirement of the terminal device comprises:
when storage space occupied by the first AI model does not exceed storage space indicated by the storage capability of the terminal device, determining that the first AI model meets a storage space requirement of the terminal device; and/or when storage space occupied by the first AI model exceeds storage space indicated by the storage capability of the terminal device, determining that the first AI model does not meet a storage space requirement of the terminal device.

33. A communication apparatus, comprising a module configured to perform the method according to any one of claims 1 to 11, comprising a module configured to perform the method according to any one of claims 12 to 24, or comprising a module configured to perform the method according to any one of claims 25 to 32.

34. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement, by using a logic circuit or by executing code instructions, the method according to any one of claims 1 to 11, the method according to any one of claims 12 to 24, or the method according to any one of claims 25 to 32.

35. A computer-readable storage medium, wherein the storage medium stores a computer program or instructions, and when the computer program or the instructions is/are executed by a communication apparatus, the method according to any one of claims 1 to 11, the method according to any one of claims 12 to 24, or the method according to any one of claims 25 to 32 is implemented.

36. A computer program product comprising instructions, wherein when the computer program product runs on a computer, the method according to any one of claims 1 to 11, the method according to any one of claims 12 to 24, or the method according to any one of claims 25 to 32 is performed.

37. An artificial intelligence AI model transmission method, comprising:
sending, by a network device, sixth information to a first network element, wherein the sixth information comprises an AI model format supported by the network device, the AI model format supported by the network device comprises a third AI model format, and/or the sixth information indicates a first communication scenario; and
receiving, by the network device, seventh information from the first network element, wherein the seventh information indicates obtaining method information of a second AI model represented in the third AI model format, or the seventh information comprises a second AI model represented in the third AI model format, and the third AI model format is determined based on the sixth information.

38. The method according to claim 37, wherein the method further comprises:
sending, by the network device, a first request message to a second network element based on the obtaining method information, wherein the first request message is used to request the second AI model; and
receiving, by the network device, the second AI model from the second network element.

39. The method according to claim 37 or 38, wherein the sixth information further comprises a third threshold and/or a fourth threshold, the third threshold is a maximum latency of a part executed by an AI model when the AI model is used by the network device to execute a communication service, and the fourth threshold is maximum power consumption of a part executed by an AI model when the AI model is used by the network device to execute a communication service.

40. The method according to any one of claims 37 to 39, wherein the sixth information further comprises one or more pieces of the following information of the network device: a hardware model, a hardware version, a storage capability, a computing capability, a capability of supporting heterogeneous computing, or an AI model compilation capability, and the AI model compilation capability comprises a capability of compiling and converting the AI model format.

41. The method according to any one of claims 37 to 40, wherein the AI model format comprises one or more of the following:
a model format output by a deep learning framework, an intermediate representation layer model format, or a model format represented by an executable file.

42. The method according to any one of claims 37 to 41, wherein the method further comprises:
sending, by the network device, first indication information to the terminal device, wherein the first indication information indicates to enable an AI communication mode in one or more communication scenarios, and the one or more communication scenarios comprise the first communication scenario.

43. An artificial intelligence AI model transmission method, comprising:
receiving, by a first network element, sixth information from a network device, wherein the sixth information comprises an AI model format supported by the network device, the AI model format supported by the network device comprises a third AI model format, and/or the sixth information indicates a first communication scenario; and
sending, by the first network element, seventh information to the network device, wherein the seventh information indicates obtaining method information of a second AI model represented in the third AI model format, or the seventh information comprises a second AI model represented in the third AI model format, and the third AI model format is determined based on the sixth information.

44. The method according to claim 43, wherein the method further comprises:
sending, by the first network element, a request message to a second network element, wherein the request message is used to request the second AI model; and
receiving, by the first network element, the second AI model from the second network element.

45. The method according to claim 43 or 44, wherein the sixth information further comprises a third threshold and/or a fourth threshold, the third threshold is a maximum latency of a part executed by an AI model when the AI model is used by the network device to execute a communication service, and the fourth threshold is maximum power consumption of a part executed by an AI model when the AI model is used by the network device to execute a communication service.

46. The method according to any one of claims 43 to 45, wherein the sixth information further comprises one or more pieces of the following information of the network device: a hardware model, a hardware version, a storage capability, a computing capability, a capability of supporting heterogeneous computing, or an AI model compilation capability, and the AI model compilation capability comprises a capability of compiling and converting the AI model format.

47. The method according to any one of claims 43 to 46, wherein the AI model format comprises one or more of the following:
a model format output by a deep learning framework, an intermediate representation layer model format, or a model format represented by an executable file.

48. A communication apparatus, comprising a module configured to perform the method according to any one of claims 37 to 42, or comprising a module configured to perform the method according to any one of claims 43 to 47.

49. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement, by using a logic circuit or by executing code instructions, the method according to any one of claims 37 to 42 or the method according to any one of claims 43 to 47.

50. A computer-readable storage medium, wherein the storage medium stores a computer program or instructions, and when the computer program or the instructions is/are run by a communication apparatus, the method according to any one of claims 37 to 42 or the method according to any one of claims 43 to 47 is implemented.

51. A computer program product comprising instructions, wherein when the computer program product runs on a computer, the method according to any one of claims 37 to 42 or the method according to any one of claims 43 to 47 is performed.

52. An apparatus, comprising a circuit, wherein the circuit is configured to perform the method according to any one of claims 1 to 32 or claims 37 to 47.

53. An apparatus, comprising a processor, wherein the processor is coupled to a memory, the memory stores instructions, and when the instructions are executed, the apparatus is enabled to perform the method according to any one of claims 1 to 32 or claims 37 to 47.

54. A communication apparatus, comprising a processor and a memory, wherein the processor is coupled to the memory;
the memory stores a computer program; and
the processor is configured to execute the computer program stored in the memory, so that the apparatus performs the method according to any one of claims 1 to 32 or claims 37 to 47.

55. A chip, wherein the chip is coupled to a memory, and is configured to read and execute program instructions stored in the memory, to perform the method according to any one of claims 1 to 32 or claims 37 to 47.

56. A communication system, comprising at least two of a terminal device, a network device, and a first device, wherein the terminal device is configured to perform the method according to any one of claims 1 to 11, the network device is configured to perform the method according to any one of claims 12 to 24, and the first device is configured to perform the method according to any one of claims 25 to 32.

57. A communication system, comprising a network device and a first network element, wherein the network device is configured to perform the method according to any one of claims 37 to 42, and the first network element is configured to perform the method according to any one of claims 43 to 47.
